(19) **Europäisches Patentamt**

**European Patent Office**

**Office européen des brevets**

(11) **EP 0 477 131 B1**

(12) **EUROPÄISCHE PATENTSCHRIFT**

(45) Veröffentlichungstag und Bekanntmachung des Hinweises auf die Patenterteilung:
**28.03.2001 Patentblatt 2001/13**

(51) Int Cl.$^7$: **H04L 25/06**, H03H 17/06

(21) Anmeldenummer: **91710032.3**

(22) Anmeldetag: **19.09.1991**

(54) **Verfahren und Anordnungen zur Abtastratenwandlung**

Method and apparatus for sample rate conversion

Procédé et dispositif de conversion de fréquence d'échantillonnage

(84) Benannte Vertragsstaaten:
**AT BE CH DE DK ES FR GB GR IT LI LU NL SE**

(30) Priorität: **21.09.1990 DE 4029942**
**21.09.1990 DE 4029943**
**21.09.1990 DE 4029944**
**24.09.1990 DE 4030112**
**24.09.1990 EP 90118272**

(43) Veröffentlichungstag der Anmeldung:
**25.03.1992 Patentblatt 1992/13**

(73) Patentinhaber: **ROBERT BOSCH GMBH**
**70442 Stuttgart (DE)**

(72) Erfinder:
• **Auer, Erich, Dr.-Ing.**
**W-7014 Kornwestheim (DE)**
• **Heinrich, Jan, Dipl.-Ing.**
**W-7060 Schorndorf (DE)**
• **Vollmer, Jürgen, Dipl.-Ing.**
**W-4763 Niederense (DE)**

(56) Entgegenhaltungen:
**EP-A- 0 390 531**

• **PROAKIS ET AL 'introduction to digital signal processing' 1989 , MACMILLAN , NEWYORK, US**
• **IEE PROCEEDINGS G. ELECTRONIC CIRCUITS & SYSTEMS Dezember 1989, STEVENAGE GB Seiten 301 - 305 , XP80153 CHAN ET AL 'multidimensional ellipsoidally and spherically symmetric recursive digital-filter design with reduced number of optimised coefficients'**
• **IEE PROCEEDINGS Bd. 130, Nr. 6, Dezember 1983, STEVENAGE, GB Seiten 225 - 235 VALENZUELA 'digital signal processing schemes for efficient interpolation and decimation'**
• **IEEE INTERNATIONAL CONFERENCE ON ACOUSTICS, SPEECH AND SIGNAL PROCESSING Bd. 1, 5. Mai 1982, PARIS, FR LAGADEC ET AL 'a 2-channel, 16-bit digital sampling frequency converter for professional digital audio'**
• **ARCHIV FUR ELEKTRONIK UND UBERTRAGUNGSTECHNIK Bd. 34, Nr. 6, 1980, STUTTGART DE Seiten 250 - 258 OETKEN 'Entwurf von digitalen Filtern zur Interpolation periodisch nicht{quidistanter Abtastwerte'**

**Beschreibung**

Die vorliegende Erfindung befaßt sich mit Anordnungen zur Abtastratendezimierung und zur Abtastratenerhöhung.

In der digitalen elektrischen Nachrichtentechnik bestehen die Signale aus Folgen von Abtastwerten, die mit einer bestimmten Abtastrate auch Abtastfrequenz genannt, auftreten. Bei der Übertragung oder Verarbeitung solcher digitaler Signale ergibt sich oft die Notwendigkeit, ein Signal mit einer ersten Abtastfrequenz in ein Signal mit einer zweiten Abtastfrequenz zu wandeln.

Es wird also eine Anordnung zur Abtastratenwandlung benötigt, die aus einem Eingangssignal mit einer ersten Abtastfrequenz bzw. Eingangsabtastfrequenz ein Ausgangssignal mit einer zweiten Abtastfrequenz bzw. Ausgangsabtastfrequenz bildet.

Ist die Ausgangsabtastfrequenz $f_o$ kleiner als die Eingangsabtastfrequenz $f_i$, so spricht man von Dezimation oder von einem Dezimator und einem Dezimationsfaktor

$$m_D = f_i/f_o$$

Der Dezimationsfaktor $m_D$ ist also ein Zahlenwert, der größer als eins ist.

Ist die Ausgangsabtastfrequenz $f_o$ größer als die Eingangsabtastfrequenz $f_i$, so spricht man von Interpolation oder von einem Interpolator sowie von einem Interpolationsfaktor

$$m_I = f_o/f_i$$

Der Interpolationsfaktor $m_I$ ist also ein Zahlenwert, der größer als eins ist.

Es sind verschiedene Verfahren und Anordnungen zur Abtastratenwandlung der eingangs erwähnten Art bekannt. Einige sind in folgenden Schriften beschrieben:

(1) Funkschau 2/1983, Seite 54 bis 58,
(2) EP 0 052 847 B1,
(3) Proakis et al "Introduction to digital signalprocessing", 1989, Macmillan Publishing, New York US, Seiten 654 bis 659

In der Schrift (1) werden auf der Seite 55 einige Verfahren beschrieben, bei denen mit einer sogenannten Umsetzfrequenz gearbeitet wird, die gleich dem kleinsten gemeinsamen Vielfachen aus der Eingangsabtastfrequenz $f_i$ und der Ausgangsabtastfrequenz $f_o$ gewählt werden muß. Dies führt unter Umständen zu einer sehr hohen Umsetzungsfrequenz, die nur mit Schwierigkeiten zu beherrschen ist.

Auch die in der Schrift (2) beschriebenen Verfahren und Anordnungen arbeiten mit einer sehr hohen Umsetzungsfrequenz.

In der Schrift (3) ist die digitale Abtastratenwandlung sowohl für den Fall der Abtastratenerhöhung (Interpolation) als auch zur Abtastratendezimierung beschrieben. Für die Abtastratendezimation wird zuvor die Bandbreite durch Filterung reduziert, um Aliasing zu vermeiden. Auch bei der Abtastratenerhöhung wird eine Filterung vorgenommen.

In der DE-OS 39 19 530 ist ein Verfahren zur Abtastratenänderung angegeben, das für einen großen Bereich von Abtastraten eine Änderung auf eine feste Abtastrate ermöglicht.

Das beschriebene Verfahren beruht auf einer Abwandlung des sogenannten stored-waveform Prinzips.

Unter der Annahme, daß ein Sendeimpuls des Eingangssignals endlich Länge besitzt, können die Überlagerungen aller möglichen Sequenzen aus M-bit vorbereitend bestimmt und in einem Speicher abgelegt werden. Die Modulation mit einem Träger kann dabei ebenfalls bereits vorgenommen und im gleichen oder einem weiteren Speicher abgespeichert werden. Zu jeder Sequenz des Eingangssignals wird dann das entsprechende Ausgangssignal ausgelesen. Zum Beispiel bei einem QPSK-Modulator werden die Signale aus den zwei Signalwegen summiert und stellen das Ausgangssignal des Modulators dar.

Eine wesentliche Vereinfachung bei der Modulation (Multiplikation mit den Trägerwellen) ergibt sich, falls die Trägerfrequenz $\omega_c$ ein Viertel der Abtastfrequenz

$$\omega_A = 2 \cdot \pi \cdot f_A \ (f_A \text{ Abtastrate})$$

ist.

Beim Verfahren zum Stand der Technik erfolgt die Modulation für alle Übertragungsraten *(Datenraten des Eingangssignals* $f_D$) auf eine Trägerfrequenz und mit einer konstanten Abtastrate. Durch die feste Abtastrate auf der Ausgangsseite des digitalen Modulators ist ein einfaches, festes, analoges Ausgangsfilter möglich. Die Abtastrate $f_A$ wird so gewählt, daß auch bei der höchsten Datenrate $f_{Dmax}$, die übertragen werden soll, das Abtasttheorem erfüllt ist. Die Datenrate kann dann beliebige Werte $f_D$ $f_{Dmax}$ annehmen.

Das genannte Verfahren geht von folgenden Überlegungen aus: Zunächst werden alle möglichen M-bit Sequenzen des Eingangssignals ermittelt und jeweils ein entsprechendes zeitkontinuierliches Signal erzeugt. Dieses Signal kann bereits mit der Trägerwelle moduliert werden, also dem Ausgangssignal entsprechen. Dieses zeitkontinuierliche Signal weist eine endliche Steigung auf. Es wird abgetastet, wobei eine Amplitudenquantisierung vorgenommen wird. Die Abtastung erfolgt äquidistant. Die Zahl der Abtastwerte innerhalb der Symbolperiode $T_D$, die sich für BPSK ergibt aus

$$T_D = \frac{1}{f_D}$$

und für QPSK aus

$$T_D = \frac{2}{f_D}$$

kann dadurch festgelegt werden, daß bei maximaler Steigung $m_{max}$ des Signals ein Amplitudenintervall $\Delta A$ der Dauer $\Delta T$ entsprich

$$(m_{max} = \frac{\Delta A}{\Delta T}).$$

Setzt man eine äquidistante Amplituden-Quantisierung mit einer Quantisierungsstufe Q bei der digitalen Realisierung voraus, so genügt es bei einer zeitlichen Abtastung des kontinuierlichen Signals im zeitlichen Raster

$$t_v = v \cdot T_A$$

das Abtastintervall $T_A$ gerade nur so klein zu wählen, daß der Maximalfehler Q in der Amplituden-Quantisierung garantiert ist. Ausgehend von der Maximalsteigung $m_{max}$ des Signals bedeutet dies:

$$\mathbf{T_A} \ = \ \frac{\text{———}}{\mathbf{m_{max}}} \ .$$

Eine zeitliche Abtastung mit kleinerem Abtastintervall als $T_A$ führt wegen der Amplituden-Quantisierung auf dieselben quantisierten Werte und ist daher technisch nicht sinnvoll.

Die so festgelegten Abtastwerte werden abgespeichert. Ist das zeitkontinuierliche Signal nicht bereits mit der Trägerwelle moduliert, so entsprechen die Abtastwerte einem Zwischensignal im Basisband. Die Modulation mit der Trägerwelle wird dann in einem weiteren Speicher abgelegt. Der Speicher enthält in einer ersten Ausführung der Modulation Abtastwerte von Sinus- und Cosinus-Schwingungen. Die Zwischensignale im Basisband werden mit aus dem Speicher ausgelesenen Sinus- und Cosinuswerten multipliziert.

In einer zweiten, sehr günstigen Ausführungsform der Modulation werden nicht Sinus- und Cosinus-Werte im Speicher abgelegt, sondern bereits die Ergebnisse aus den Multiplikationen der Zwischensignale mit den Sinus- und Cosinus-Werten. Die zeitliche Abtastung dieser Multiplikationsergebnisse wird wiederum durch die Abtastung in der Amplitude, d.h. durch die Quantisierungsstufe Q bei der digitalen Realisierung und die im Signal enthaltene, maximale Steigung $m_{max}$ bestimmt. Es gilt auch hier:

$$T_A = \frac{Q}{m_{max}}$$

Zunächst wird davon ausgegangen, daß das bereits modulierte Ausgangssignal abgetastet und die Abtastwerte abgespeichert werden.

In einem Speicher befinden sich nun also zu jeder M-bit Sequenz n vorgegebene Abtastwerte.

Es werden M-bit Sequenzen eines digitalen Eingangssignals abgespeichert. Die M-bit Sequenz wird zur Adressierung des Speicherbereichs verwendet, in dem die zu dieser M-bit Sequenz gehörenden n vorgegebenen Abtastwerte liegen. Die Abtastrate $f_A$ ist fest vorgegeben (für alle beliebigen Datenraten).

Durch fortlaufende Aufakkumulation eines Wertes

$$\Delta_A = \frac{f_D}{f_A} \cdot N_\Delta \; (N_\Delta = \text{Normierungskonstante})$$

wird bestimmt, welcher der n Abtastwerte benötigt wird. Bei einem Eingangssignal mit anderer Datenrate $f_D$ und gleicher M-bit Sequenz liegen wieder die gleichen abgespeicherten n vorgegebenen Abtastwerte bei der Wahl der benötigten Abtastwerte zugrunde, die Wahl hängt aber nun von einem anderen Wert $\Delta_A{}'$ ab. Es ist:

$$\Delta_A{}' = \frac{f_D{}'}{f_A} \cdot N_\Delta \neq \Delta_A$$

Die ausgelesenen Abtastwerte bilden das Ausgangssignal.

Der besseren Unterscheidung halber soll die Anordnung zur Änderung verschiedener auf eine fest Abtastrate die Sendeseite, die Anordnung zur Änderung einer festen auf verschiedene Abtastraten die Empfangsseite genannt werden.

Weiter soll eine Anordnung zum Ändern einer Abtastrate zu einem höheren Wert ein Interpolar, eine Anordnung zum Ändern einer Abtastrate zu einem niedrigeren Wert ein Dezimator genannt werden.

Aufgabe der vorliegenden Erfindung ist es, Anordnungen zur Abtastratendezimierung und Abtastratenerhöhung anzugeben. Die Ansprüche 1 und 2 zeigen derartige Anordnungen auf.

Bei Herabsetzung der Abtastrate wird zunächst das abgetastete Signal durch ein solches digitales Filter geleitet, daß die größte auftretende Frequenz im nach der Filterung vorliegenden Spektrum kleiner oder gleich der halben neu zu erzeugenden Abtastfrequenz ist.

Das heißt, daß die Flanke des Filters so steil wie möglich an dem Ort der vorher genannten größten auftretenden Frequenz verläuft.

Bei Heraufsetzung der Abtastrate wird das abgetastete Signal durch ein solches digitales Filter geleitet, daß im Frequenzbereich zwischen kleiner oder gleich der Hälfte der ursprünglichen und der Hälfte der neuen Abtastrate keine spektralen Störterme auftreten.

Auch hier gilt das oben über die Flanke des Filters Gesagte. Das entstandene Signal wird mit der neuen Abtastrate abgetastet.

Zusätzlich zu den vorher genannten Forderungen zur Bandbegrenzung kann das digitale Filter in beiden Fällen, d. h. der Herabsetzung und der Heraufsetzung der Abtastrate, zu einer weiteren noch stärkeren Bandbegrenzung und/oder spektralen Formung des Signals am Eingang der Anordnung zur Abtastratenwandlung genutzt werden. Eine Anordnung nach der Erfindung ist aufgebaut mit einem digitalen FIR-Filter (Filter mit endlich langer Impulsantwort), dessen Zahl der Koeffizienten bestimmt ist durch die Wortbreite des Signals bei der urprünglichen Abtastrate und der maximalen Steigung in der Impulsantwort des FIR-Filters.

In einer Weiterbildung der genannten Anordnung ist die Zahl der Koeffizienten des digitalen FIR-Filters zusätzlich abhängig vom Verhältnis der Wortbreite vor und nach der Abtastratenwandlung.

Weiterbildungen der Anordnungen werden in den Unteransprüchen beschrieben.

Die Erfindung soll an verschiedenen Beispielen näher erläutert werden.

In den Figuren ist dargestellt:

Figur 1                            ein Blockschaltbild der Anordnung zur Abtastratenwandlung, also des Dezimator-Interpolators,

Figur 2a, 2b, 3 Figur 4                            Einzelheiten zu Figuren 1 und 8 ein Blockschaltbild über die Verwendung des Dezimator-Interpolators als Dezimator,

| | |
|---|---|
| Figur 5 | ein Blockschaltbild über die Verwendung des Dezimator-Interpolators als Interpolator, |
| Figur 6 | eine Weiterbildung der Anordnung nach der Figur 1, |
| Figur 7 | die Verwendung der Anordnung nach der Figur 6 als Dezimator. |
| Figur 8 | ein Blockschaltbild der Anordnung zur Abtastratenwandlung, hier eines Dezimators, |
| Figur 9 | ein Blockschaltbild über die Verwendung des Dezimators nach Figur 8 |
| Figur 10 | eine Weiterbildung des Dezimators nach Figur 8 |
| Figur 11 | die Verwendung des Dezimators nach Figur 10 |
| Figur 12 | ein Blockschaltbild der Anordnung zur Abtastratenwandlung, hier eines Interpolators, |
| Figur 13 | ein Blockschaltbild über die Verwendung des Interpolators, nach Figur 12 |
| Figur 14 | eine Weiterbildung des Interpolators nach Figur 12 |

In der Beschreibung und den Figuren bedeuten:

| | |
|---|---|
| A | ein Signalausgang, |
| AD | Leitung für Adressen |
| ADD | Addierer |
| AG | Adressgenerator |
| $A_M$ | Signalausgänge von MA |
| BU | Betriebsartenumschalten |
| C | Taktimpulseingang für VM und VE |
| CO | Ausgang für den Übertrag |
| D-I | Dezimator-Interpolator |
| DE | Dezimator |
| E | Signaleingang |
| $f_A$ | Leitung für TA |
| $f_A$ | Leitung für TA' |
| IN | Interpolator |
| M | Eingabeeingang für Dezimatitions- bzw. Interpolationsfaktor |
| MA | Multiplizierer-Akkumulator |
| MK | Maskierungsschaltung |
| MU | Multiplizierer |
| MX | Multiplexer |
| P,Q | Eingänge für Summanden |
| S | Ausgang für die Summe |
| SP | Speicher |
| SQ | Signalquelle |
| SS | Signalsenke |
| ST | Steuereingang für MX |
| SU | Summierer |
| TA | Takt, von außen zugeführt |
| TA' | Takt, abgeleitet |
| TE | Takteingang |
| TG | Taktgenerator |
| TS | Taktausgang M |
| TU | Taktumrechner |
| VE | Verzögerungsschaltungen für ein Eingangssignal |
| VM | Verzögerungsschaltungen in MA |
| VSU | Verzögerungsschaltung |
| VTU | Synchronisierschaltung |

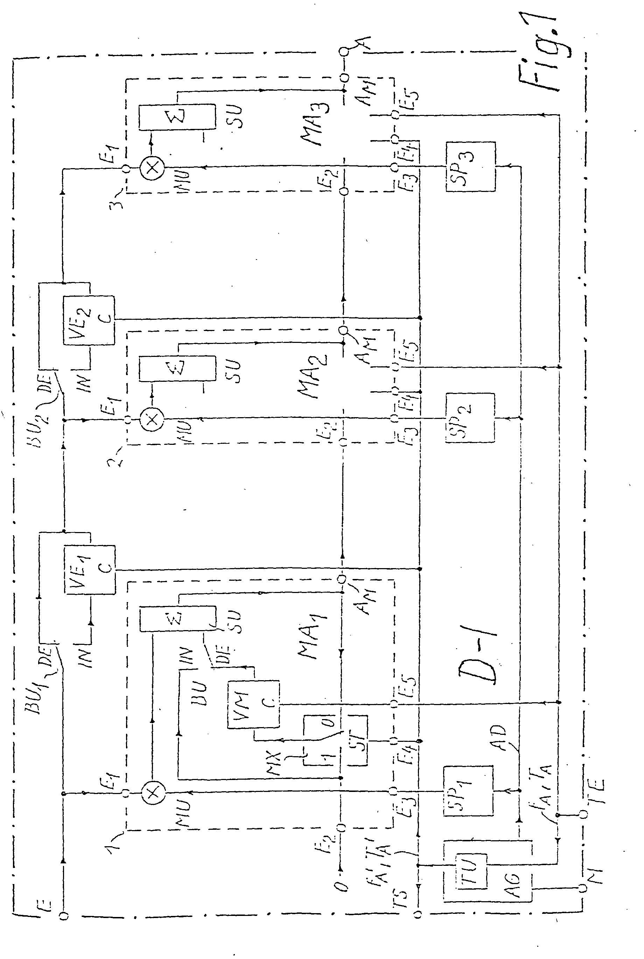

Zunächst wird die Anordnung nach Figur 1 beschrieben.

Die Verzögerungsschaltungen $VE_1$ und $VE_2$ sowie VM sind gleich aufgebaut. Eine solche Verzögerungsschaltung gibt ein an ihrem Eingang anliegendes Signal eine Taktperiode des an ihrem Taktpulseingang C liegenden Taktes später an ihrem Ausgang ab. Oder anders ausgedrückt, sie verzögert ein Signal um eine Taktperiode. Solche Verzögerungsschaltungen werden auch als Latch bezeichnet.

Die Multiplizierer-Akkumulatoren sind ebenfalls gleich aufgebaut. Deshalb ist nur der erste Multiplizierer-Akkumulator $MA_1$ vollständig gezeichnet. Der Multiplexer MX wirkt als Umschalter, dessen Schaltstellung durch ein Steuersignal am Steuereingang ST gesteuert wird. Weist dieses Steuersignal den Signalpegel logisch Null auf, so nimmt der Multiplexer die gezeichnete und mit "0" bezeichnete Stellung ein, in der der Ausgang des Summierers SU mit dem Eingang der Verzögerungsschaltung VM verbunden ist. Nimmt jedoch das Steuersignal am Steuereingang ST den Signalpegel logisch EINS an, so nimmt der Multiplexer die mit "1" bezeichnete Schaltstellung ein, in der der Signaleingang E2 zum Eingang der Verzögerungsschaltung VM durchgeschaltet ist.

An dem Signaleingang $E_2$ des ersten Multiplizierer-Akkumulators $MA_1$ liegt dauernd ein Datenwort mit dem Wert Null an.

An den Eingang M ist in nicht dargestellter Weise ein Gerät zur Eingabe des Dezimations- bzw. Interpolationsfaktors angeschlossen. Im einfachsten Fall ist dies ein Gerät für eine Handeingabe. Der so eingegebene Dezimations- bzw. Interpolationsfaktor gelangt in den Adressgenerator AG.

Da im Adressgenerator nicht der Dezimations- bzw. Interpolationsfaktor selbst, sondern dessen Kehrwert benötigt wird, ist der Eingang M zur Eingabe des jeweiligen Kehrwertes

$$\frac{1}{m_D} \text{bzw.} \quad \frac{1}{m_I}$$

ausgebildet.

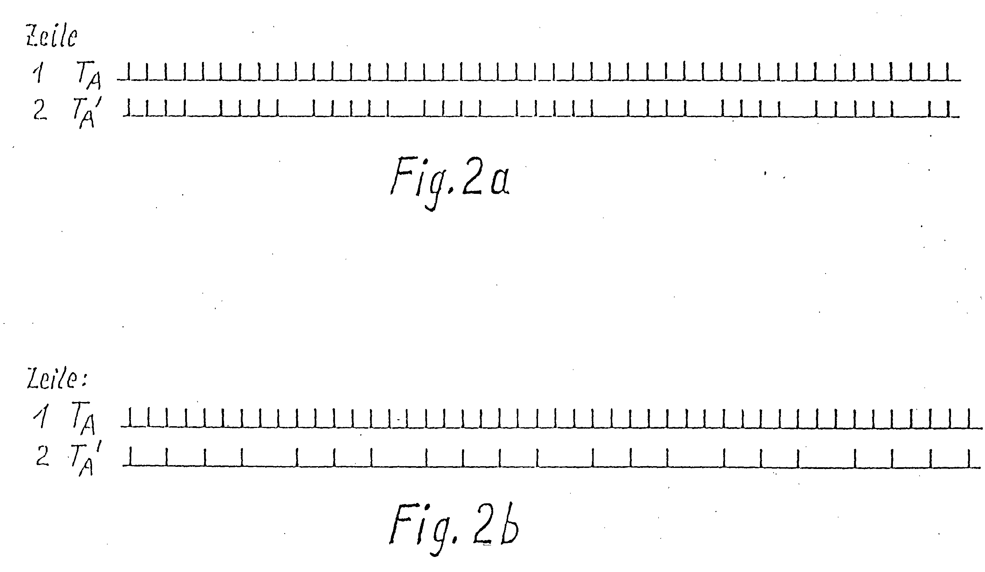

Über den Takteingang TE wird von außen ein Takt (Takt des Eingangs- (E) oder Ausgangssignals (A), je nachdem, ob Dezimations- oder Interpolationsbetrieb beabsichtigt ist) mit der Taktperiode $T_A$ bzw. mit der Taktfrequenz $f_A$ zugeführt. Dieser Takt gelangt unter anderem auch zu dem Taktumrechner TU, der ein Teil des Adressgenerators AG ist. Der Taktumrechner TU erzeugt aus dem von außen zugeführten Takt $T_A$ in Abhängigkeit vom Dezimations- bzw. Interpolationsfaktor den abgeleiteten Takt TA' in der Weise, daß ein Taktimpuls des abgeleiteten Taktes TA' immer gleichzeitig mit einem Taktimpuls des von außen zugeführten Taktes $T_A$ auftritt. Dies wird anhand der Figuren 2a und 2b erläutert. In den jeweiligen Zeilen 1 ist der von außen zugeführte Takt $T_A$ dargestellt und in der jeweiligen Zeile 2 der abgeleitete Takt $T_A$'. Beim abgeleiteten Takt kann man also nicht von einer einzigen, konstanten Periodendauer sprechen. Sie ist ein ganzzahliges Vielfaches der Periodendauer des von außen zugeführten Taktes $T_A$. Dieses ganzzahlige Viefache kann zwischen zwei aufeinander folgenden ganzen Zahlen wechseln. Dadurch können auch nicht ganzzahlige Dezimations- bzw. Interpolationsfaktoren verwirklicht werden.

Beim von außen zugeführten Takt $T_A$ ist die Taktfrequenz $f_A$ gleich dem Kehrwert der Periodendauer $T_A$. Eine solche Definition ist beim abgeleiteten Takt nicht möglich. Allenfalls kann durch einen Zahlenwert mit der Bedeutung einer Frequenz $f_A$' angegeben werden, wieviel Taktimpulse über einen ausreichend langen Zeitraum gemittelt je Zeiteinheit auftreten. Für den Dezimationsfaktor $m_D$ gilt dann:

$$mD = \frac{f_A}{f_A'}$$

Sinngemäß gilt für den Interpolationsfaktor $m_I$:

$$mI = \frac{f_A}{f_A'}$$

In der Figur 2a ist die Funktion des Taktumrechners TU für den Fall dargestellt, daß der Dezimations- bzw. Interpolationsfaktor zwischen 1 und 2 liegt. Deshalb wechselt das Vielfache der Taktperiode $T^A$, welches in Zeile 2 auftritt, zwischen 1 und 2. Diese Wechsel müssen nicht in gleichen Abständen auftreten. Sie können zum Beispiel, wie hier dargestellt, jeweils nach 4 oder 5 Taktimpulsen des abgeleiteten Taktes $T_A$' auftreten, und zwar so, wie es zu einer guten Annäherung des Dezimations- bzw. Interpolationsfaktors nötig ist.

Die Figur 2b unterscheidet sich von der Figur 2a dadurch, daß der Dezimations- bzw. Interpolationsfaktor zwischen 2 und 3 liegt. Dementsprechend wechselt das Vielfache der Taktperiode $T_A$, das beim abgeleiteten Takt $T_A$' auftritt, zwischen dem 2- und 3-fachen der Taktperiode $T_A$, wobei diese Wechsel ebenfalls nicht in gleichen Abständen auftreten müssen.

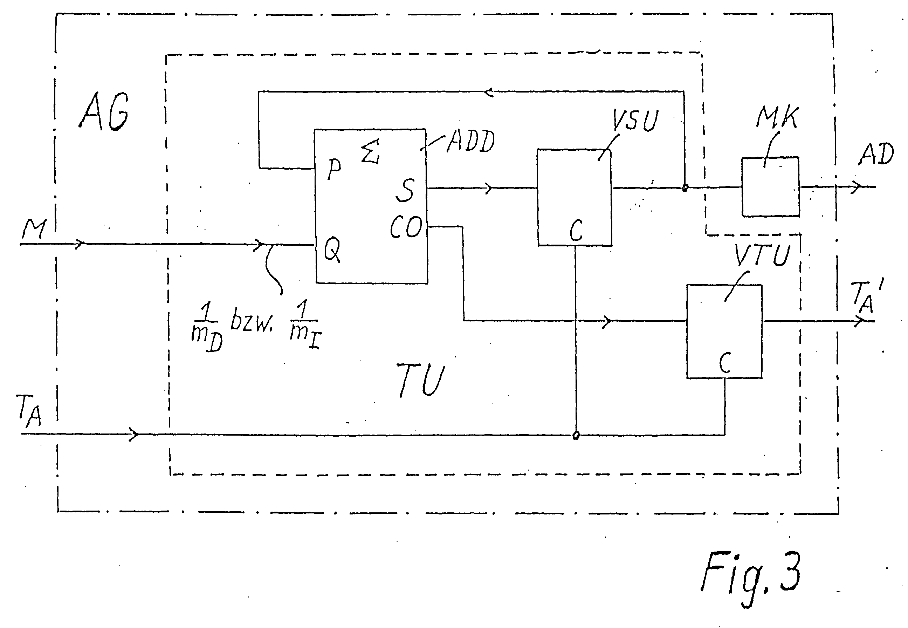

Anhand der Figur 3 wird eine Schaltanordnung für den Adressgenerator AG beschrieben.

Der über den Eingang M eingegebene Kehrwert

$$\frac{1}{m_D} \text{ bzw. } \frac{1}{m_I}$$

des Dezimations- bzw. Interpolationsfaktors gelangt auf den Eingang Q des Addierers ADD. Das vom Addierer über den Ausgang S abgegebene Summensignal wird in der Verzögerungsschaltung VSU um eine Taktperiode des von außen zugeführten Taktes $T_A$ verzögert und dann dem Eingang P des Addierers zugeführt. Es wird also der Kehrwert des Dezimations- bzw. des Interpolationsfaktors fortlaufend im Takt des von außen zugeführten Taktes $T_A$ aufsummiert. Wenn dabei der Wert 1 erreicht oder überschritten wird, entsteht ein Übertrag und der Ausgang CO nimmt den Wert logisch EINS an. Dieses Übertrags-Signal CO bildet nach der Synchronisierung mit dem von außen zugeführten Takt $T_A$ in der Synchronisierschaltung VTU den abgeleiteten Takt $T_A$'.

Die Wortbreite für den Kehrwert des Dezimations- bzw. Interpolationsfaktors wird der geforderten Genauigkeit entsprechend gewählt. Dementsprechend wird auch die Wortbreite gewählt, für deren Verarbeitung der Addierer ADD und die Verzögerungsschaltung VSU bemessen ist.

Das Ausgangssignal der Verzögerungsschaltung VSU wäre auch als Adresse AD brauchbar. Jedoch weist es mit seiner vollen Wortbreite eine unnötig große Genauigkeit auf. Deshalb ist die Maskierungsschaltung MK nachgeschaltet, die nur die höchstwertigen Bits durchläßt. Die Anzahl der höchstwertigen Bits wird entsprechend der für die Adressen geforderten Genauigkeit bemessen. Die so gewonnene Adresse AD wird, wie in der Figur 1 dargestellt ist, über die Leitung AD den Speichern $SP_1$ bis $SP_3$ zugeleitet.

In den Speichern ist unter jeder Adresse ein Koeffizient gespeichert. Alle Koeffizienten in aufsteigender Reihenfolge der Adressen und der Speicher aneinandergereiht beschreiben die Impulsantwort eines Filters. Nach Anlegen einer Adresse an einen Speicher wird der zugeordnete Koeffizient an den zugeordneten Multiplizierer-Akkumulator übertragen. Als Speicher kommen sowohl Festwertspeicher als auch Schreib-Lese-Speicher infrage. Festwertspeicher sind auch unter der Bezeichnung "Read-Only Memory", abgekürzt "ROM", bekannt. Für Schreib-Lese-Speicher ist auch der Ausdruck "Random Access Memory", abgekürzt "RAM", üblich.

Um eine übersichtliche Darstellung zu erreichen, sind nur jeweils drei Multiplizierer-Akkumulatoren und Speicher dargestellt. In Wirklichkeit ist die Anzahl dieser Baugruppen größer. Bezeichnet man mit n die Anzahl der Multiplizierer-Akkumulatoren, so sind auch n Speicher erforderlich sowie für den Interpolationsbetrieb jeweils n-1 Verzögerungsschaltungen für das Eingangssignal.

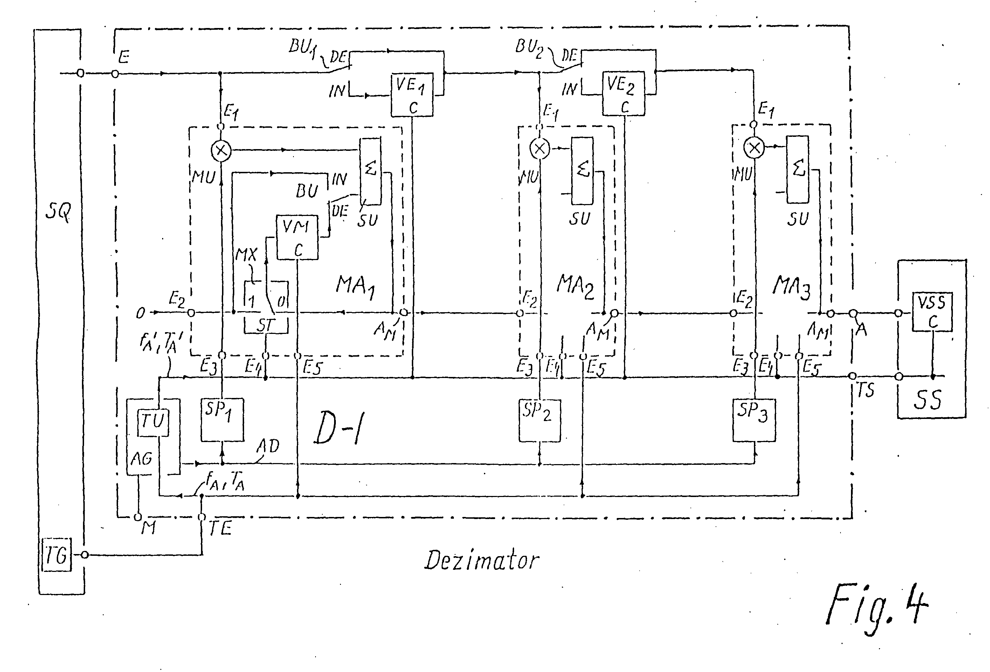

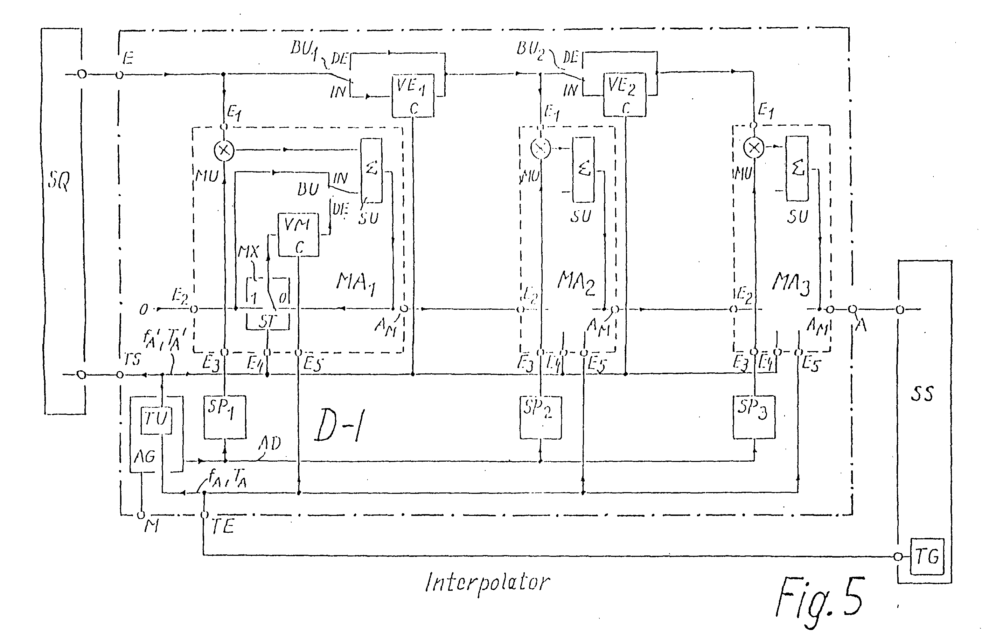

Die weiteren Funktionen werden anhand der Figuren 4 und 5 erläutert.

Der Signalausgang der Signalquelle SQ ist mit dem Signaleingang E des Dezimators-Interpolators verbunden. Dessen Signalausgang A ist mit dem Signaleingang der Signalsenke SS verbunden. der Taktgenerator TG ist mit dem Takteingang TE verbunden.

In der Figur 4 ist die Verwendung des Dezimator-Interpolators als Dezimator dargestellt. Die Betriebsartenumschalter BU sowie $BU_1$ und $BU_2$ befinden sich in der Stellung "Dezimator". Der Taktgenerator TG befindet sich in der Signalquelle SQ, die die das Eingangssignal des Dezimators bildenden Abtastwerte synchron mit dem vom Taktgenerator erzeugten Takt abgibt. Dies ist für den Dezimator der von außen zugeführte Takt $T_A$. Er gelangt auch auf die Taktpulseingänge C der Verzögerungsschaltungen VM.

Der abgeleitete Takt $T_A$' wird über die Signaleingänge $E_4$ den Steuereingängen ST aller Multiplexer MX zugeführt. So wird bewirkt, daß die Multiplexer während eines jeden Taktimpulses die Schaltstellung "1" einnehmen und beibehalten, solange keine Lücken mit einem Mehrfachen von $T_A$ im abgeleiteten Takt auftreten. Dieser gelangt über den Taktausgang TS auf den Taktpulseingang C der Verzögerungsschaltung VSS in der Signalsenke SS.

Die das Eingangssignal bildenden Abtast-Werte gelangen im Takt $T_A$ über die Signaleingänge $E_1$ auf die Multiplizierer MU aller Multiplizierer-Akkumulatoren. Im selben Takt gibt der Adressgenerator AG die Adressen AD ab, so daß die zugehörigen Koeffizienten ebenfalls in diesem Takt aus den Speichern $SP_1$ bis $SP_3$ abgerufen und über die Signaleingänge $E_3$ aller Multiplizierer-Akkumulatoren den Multiplizierern MU zugeleitet werden. Das heißt, auch die Produkte, die von den Ausgängen der Multiplizierer MU dem jeweils zugehörigen Summierer SU zugeleitet werden, sind in Takt des von außen zugeführten Taktes $T_A$ auftretende Datenworte.

Es wird zunächst angenommen, daß die Multiplexer die in der Figur 4 dargestellte Stellung aufweisen. In diesem Fall addiert der jeweilige Summierer SU zu dem von zugehörigen Multiplizierer MU erhaltenen Produkt seine um eine Taktperiode des von außen zugeführten Taktes $T_A$ ältere Summe. Dies geschieht dadurch, daß in der zugehörigen Verzögerungsschaltung VM die Summe um die Dauer dieser Taktperiode verzögert wird.

Steht jedoch der jeweilige Multiplexer MX in der stellung 1, so addiert der Summierer SU zu dem vom zugehörigen Multiplizierer MU erhaltenen Produkt die Summe aus dem vorangehenden Multiplizierer-Akkumulator, wobei die Summe ebenfalls in der zugehörigen Verzögerungsschaltung VM um eine Taktperiode verzögert wird. Die Summe gelangt vom Ausgang des Summierers SU im vorangehenden Multiplizierer-Akkumulator über dessen Signal-Ausgang $A_M$ auf den Signaleingang $E_2$ und damit in den Multiplexer MX des hier betrachteten Multiplizierer-Akkumulators. Da dem ersten Multiplizierer-Akkumulator $MA_1$ kein weiter Multiplizierer-Akkumulator vorangeht, liegt an seinem Signal-

eingang $E_2$ dauernd ein Datenwort mit dem Wert Null an.

An dem Signalausgang $A_M$ des letzten Multiplizierer-Akkumulators $MA_3$ ist über dem Signalausgang A eine in einer Signalsenke SS befindliche Verzögerungsschaltung VSS angeschlossen. Ihrem Taktpulseingang C wird über den Taktausgang TS der abgeleitete Takt $T_A'$ zugeführt. Auch für diese Verzögerungsschaltung ist die Bezeichnung "Latch" zutreffend. Sie wirkt hier als Übernahmeschaltung. Durch ihre Taktung mit dem abgeleiteten Takt $T_A'$ übernimmt sie aus der an ihrem Eingang anliegenden Folge von Abtastwerten nur die jenigen, die gleichzeitig mit einem Taktimpuls des abgeleiteten Taktes $T_A'$ auftreten. Das heißt, an ihrem nicht dargestellten Ausgang erscheint zur weiteren Verarbeitung in der Signalsenke SS eine Folge von Abtastwerten im Takt des abgeleiteten Taktes $T_A'$, also ein in der Abtastrate vermindertes Signal. Der abgeleitete Takt $T_A'$ wird in der Signalsenke SS nicht nur zur Taktung der Verzögerungsschaltung VSS sonder auch zur Verarbeitung des in der Abtastrate verminderten Signals benötigt. Die Lücken im abgeleiteten Takt bewirken einen Jitter, der mit bekannten Methoden beseitigt werden kann.

Die Figur 5 zeigt den Dezimator-Interpolator D-I bei seiner Verwendung als Interpolator. Die Betriebsartenumschalter BU, $BU_1$ und $BU_2$ befinden sich in der Stellung "Interpolator". Der Taktgenerator TG befindet sich in der Signalsenke SS. Der von außen zugeführte Takt $T_A$ gelangt auch auf die Taktpulseingänge C der Verzögerungsschaltungen VM. Dies ist jedoch ohne Bedeutung, da Ausgangssignale der Verzögerungsschaltungen VM nicht weiterverarbeitet werden.

Der abgeleitete Takt wird den Taktpulseingängen C der Verzögerungsschaltungen $VE_1$ und $VE_2$ sowie über den Taktausgang TS der Signalquelle SQ zugeführt. In der Signalquelle SQ befindet sich eine Einrichtung, mit der in dem über den Taktausgang TS zugeführten Takt Abtastwerte ausgespeichert und als Eingangssignal über den Signaleingang E an den Interpolator gegeben werden. Dort gelangen sie unmittelbar auf den Eingang $E_1$ des ersten Multiplizierer-Akkumulators $MA_1$. Zu den anderen Multiplizierer-Akkumulatoren gelangen sie über die Verzögerungsschaltungen $VE_1$ und $VE_2$. Das heißt, die Abtastwerte werden mit dem abgeleiteten Takt $T_A'$ aus der Signalquelle ausgespeichert und durch die aus den Verzögerungsschaltungen $VE_1$ und $VE_2$ bestehende Verzögerungskette geschoben.

Die Adressen AD treten, wie in der Beschreibung der Figur 3 erläutert, im Takt des von außen zugeführt Taktes $T_A$ auf. Also werden in diesem Takt auch die Koeffizienten aus den Speichern $SP_1$ bis $SP_3$ abgerufen und dann die zugehörigen Multiplizierer gegeben. Daraus folgt, daß die an den Ausgängen der Multiplizierer auftretenden Produkte Folgen von Datenworten sind, die im Takt des von außen zugeführten Taktes $T_A$ auftreten. Die Produkte werden in den Summierern zu einem Ausgangssignal summiert, das über den Signalausgang A der Signalsenke SS zugeführt wird.

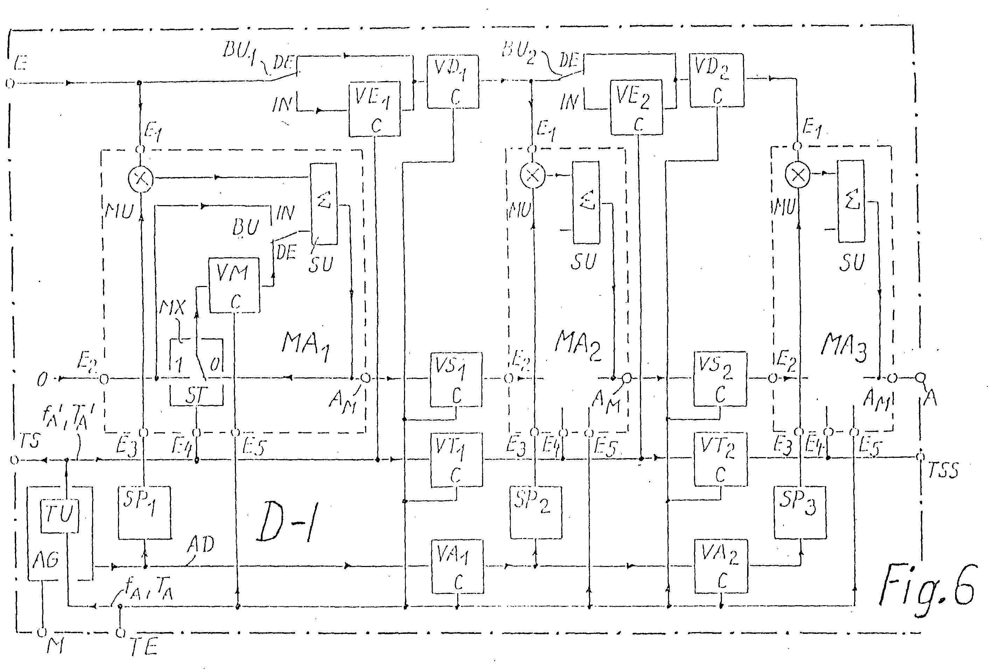

Der in der Figur 1 dargestellte Dezimator-Interpolator hat den Nachteil, daß beim Betrieb als Dezimator die den Eingang E speisende Signalquelle mit den vielen Multiplizierern aller Multiplizierer-Akkumulatoren belastet ist. Beim Betrieb als Interpolator ist nachteilig, daß die Signallaufzeit vom Eingang $E_1$ des ersten Multiplizierer-Akkumulators bis zum Ausgang $A_M$ des letzten Multiplizierer-Akkumulators klein sein muß gegenüber der Taktperiode des abgeleiteten Taktes $T_A'$. Beide Nachteile erlauben nur eine geringe Taktfrequenz. Der in der Figur 6 dargestellte Dezimator-Interpolator vermeidet diese Nachteile. Er unterscheidet sich von dem in der Figur 1 dargestellten dadurch, daß zwischen den Stufen, die jeweils aus einem Multiplizierer-Akkumulator und dem zugehörigen Speicher $SP_1$, $SP_2$ usw. bestehen, die Verzögerungsschaltungen $VD_1$, $VS_1$, $VT_1$, $VA_1$, bzw. $VD_2$, $VS_2$, $VT_2$ und $VA_2$ eingefügt sind. Jede Verzögerungsschaltung verzögert das jeweilige Signal um eine Taktperiode des von außen zugeführten Taktes $T_A$. Die Verzögerungsschaltungen können durch D-Flipflops verwirklicht werden, wobei an ihren Taktsignaleingängen der von außen zugeführte Takt $T_A$ anliegt. Bei den Verzögerungsschaltungen $VT_1$ und $VT_2$ genügt jeweils ein Flipflop. Bei den Verzögerungsschaltungen $VD_1$, $VD_2$, $VS_1$, $VS_2$, $VA_1$ und $VA_2$ ist wegen der Paralleldarstellung der jeweiligen Signale mit mehreren Bits die Anzahl der Flipflops gleich der jeweiligen Anzahl von Bits eines Datenwortes. Ferner ist ein weiterer Taktausgang TSS vorgesehen.

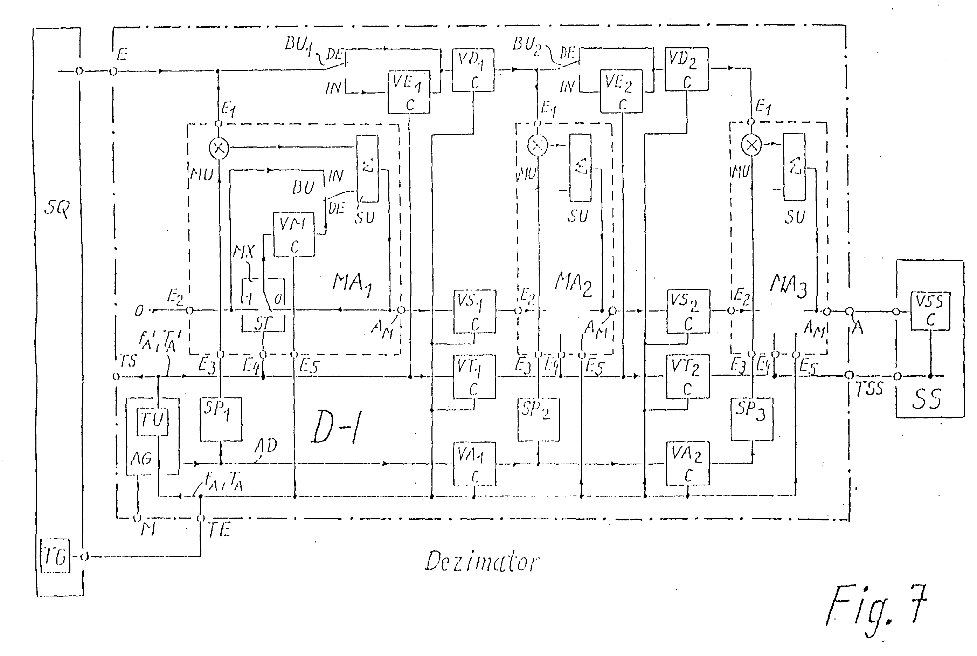

In der Figur 7 ist die Verwendung des in der Figur 6 dargestellten Dezimator-Interpolators als Dezimator gezeichnet. Der Unterschied zur Figur 4 besteht darin, daß der Taktpulseingang C der Verzögerungsschaltung VSS in der Signalsenke SS nicht an den Taktausgang TS sondern an den Taktausgang TSS angeschlossen ist. Der Text zur Figur 4 gilt hier sinngemäß.

Für die Verwendung des in der Figur 6 dargestellten Dezimator-Interpolators als Interpolator gilt die Figur 5 und der zugehörige Text sinngemäß.

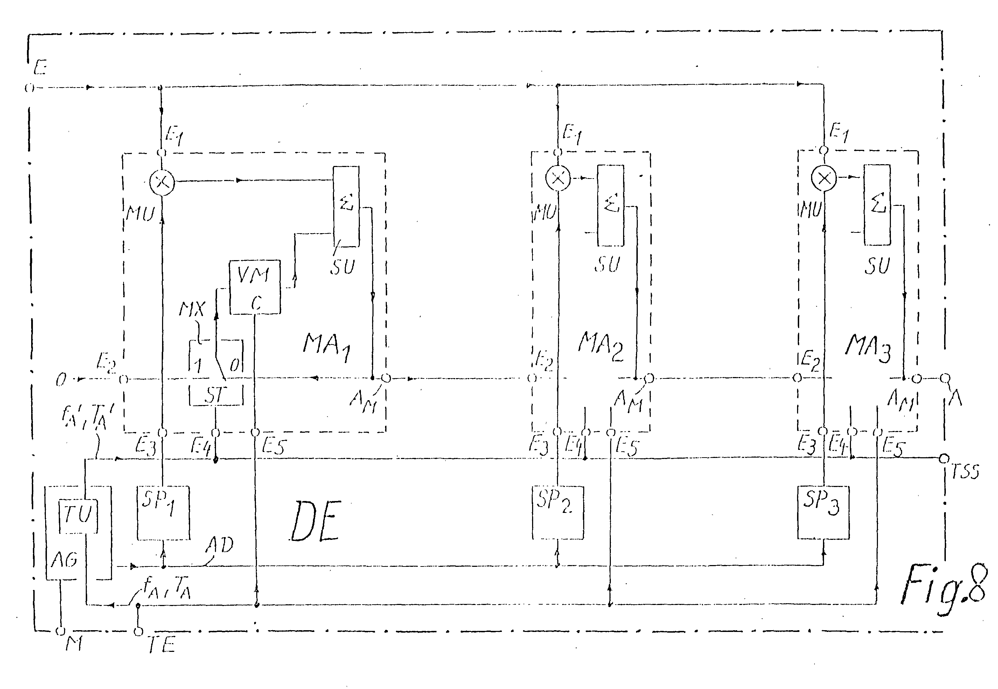

Im Folgenden sollen die Ausführungsbeispiele nach Figur 8 - 11 beschrieben werden.

Eine Verzögerungsschaltung gibt in Figur 8 ein an ihrem Eingang anliegendes Signal eine Taktperiode des an ihrem Taktpulseingang C liegenden Taktes später an ihrem Ausgang ab. Oder anders ausgedrückt, sie verzögert ein Signal um eine Taktperiode. Solche Verzögerungsschaltungen werden auch als Latch bezeichnet.

Die Multiplizierer-Akkumulatoren sind gleich aufgebaut. Deshalb ist nur der erste Multiplizierer-Akkumulator $MA_1$ vollständig gezeichnet. Der Multiplexer MX wirkt als Umschalter, dessen Schaltstellung durch ein Steuersignal am Steuereingang ST gesteuert wird. Weist dieses Steuersignal den Signalpegel logisch Null auf, so nimmt der Multiplexer die gezeichnete und mit "0" bezeichnete Stellung ein, in der der Ausgang des Summierers SU mit dem Eingang der Verzögerungsschaltung VM verbunden ist. Nimmt jedoch das Steuersignal am Steuereingang ST den Signalpegel logisch 1 an, so nimmt der Multiplexer die mit "1" bezeichnete Schaltstellung ein, in der der Signaleingang E2 zum Eingang der Verzögerungsschaltung VM durchgeschaltet ist.

An dem Signaleingang $E_2$ des ersten Multiplizierer-Akkumulators $MA_1$ liegt dauernd ein Datenwort mit dem Wert Null an.

An den Eingang M ist in nicht dargestellter Weise ein Gerät zur Eingabe des Dezimationsfaktors angeschlossen. Im einfachsten Fall ist dies ein Gerät für eine Handeingabe. Der so eingegebene Dezimationsfaktor gelangt in den Adressgenerator AG.

Da im Adressgenerator nicht der Dezimationsfaktor selbst sondern dessen Kehrwert benötigt wird, ist der Eingang M zur Eingabe des jeweiligen Kehrwertes

$$\frac{1}{m_D}$$

ausgebildet.

Über den Takteingang TE wird von außen ein Takt mit der Taktperiode $T_A$ bzw. mit der Taktfrequenz $f_A$ zugeführt. Dieser Takt gelangt unter anderem auch zu dem Taktumrechner TU, der ein Teil des Adressgenerators AG ist. Der Taktumrechner TU erzeugt aus dem von außen zugeführten Takt $T_A$ in Abhängigkeit vom Dezimationsfaktor den abgeleiteten Takt $T_A'$ in der Weise, daß ein Taktimpuls des abgeleiteten Taktes TA' immer gleichzeitig mit einem Taktimpuls des von außen zugeführten Taktes $T_A$ auftritt. Dies wird anhand der Figuren 2a und 2b erläutert. In den jeweiligen Zeilen 1 ist der von außen zugeführte Takt $T_A$ dargestellt und in der jeweiligen Zeile 2 der abgeleitete Takt $T_A'$. Beim abgeleiteten Takt kann man also nicht von einer einzigen, konstanten Periodendauer sprechen. Sie ist ein ganzzahliges Vielfaches der Periodendauer des von außen zugeführten Taktes $T_A$. Dieses ganzzahlige Vielfache kann zwischen zwei aufeinander folgenden ganzen Zahlen wechseln. Dadurch können auch nicht ganzzahlige Dezimationsfaktoren verwirklicht werden.

Beim von außen zugeführten Takt $T_A$ ist die Taktfrequenz $f_A$ gleich dem Kehrwert der Periodendauer $T_A$. Eine solche Definition ist beim abgeleiteten Takt nicht möglich. Allenfalls kann durch einen Zahlenwert mit der Bedeutung einer Frequenz $f_A'$ angegeben werden, wieviel Taktimpulse über einen ausreichend langen Zeitraum gemittelt je Zeiteinheit auftreten. Für den Dezimationsfaktor $m_D$ gilt dann:

$$m_D = \frac{f_A}{fA'}$$

Die Schaltungsanordnung für den Adressgenerator wurde bereits vorher beschrieben (Fig. 3).

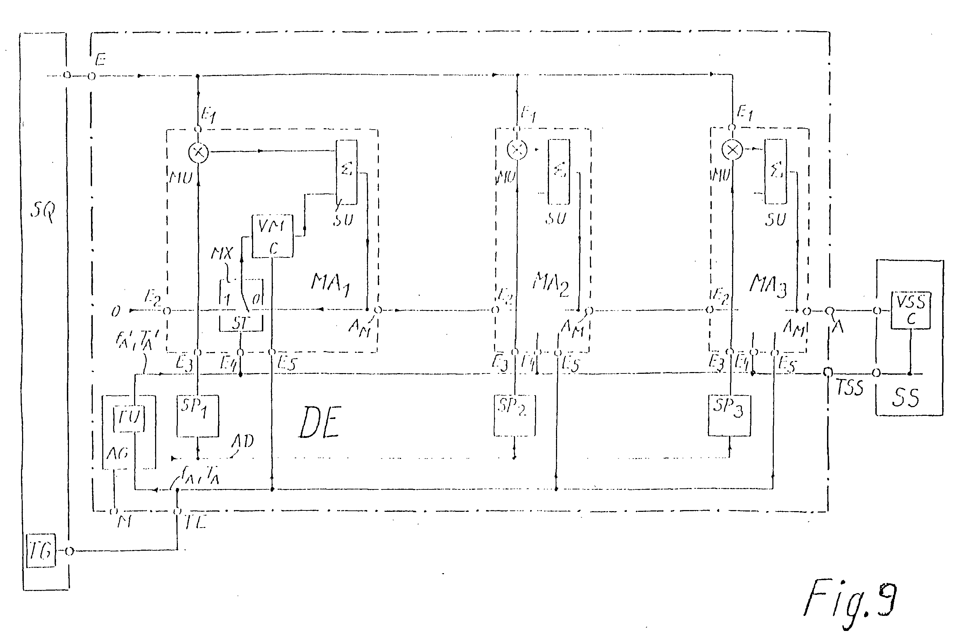

Die weiteren Funktionen werden anhand der Figur 9 erläutert.

Der Signalausgang der Signalquelle SQ ist mit dem Signaleingang E des Dezimators verbunden. Dessen Signalausgang A ist mit dem Signaleingang der Signalsenke SS verbunden. Der Taktgenerator TG ist mit dem Takteingang TE verbunden.

In der Figur 9 ist die Verwendung des Dezimators dargestellt. Der Taktgenerator TG befindet sich in der Signalquelle SQ, die die das Eingangssignal des Dezimators bildenden Abtastwerte synchron mit dem vom Taktgenerator erzeugten Takt abgibt. Dies ist für den Dezimator der von außen zugeführte Takt $T_A$. Er gelangt auch auf die Taktpulseingänge C der Verzögerungsschaltungen VM.

Der abgeleitete Takt $T_A'$ wird über die Signaleingänge $E_4$ den Steuereingängen ST aller Multiplexer MX zugeführt. So wird bewirkt, daß die Multiplexer während eines jeden Taktimpulses die Schaltstellung "1" einnehmen. Außerdem gelangt er über den Taktausgang TSS auf den Taktpulseingang C der Verzögerungsschaltung VSS in der Signalsenke SS.

Die das Eingangssignal bildenden Abtast-Werte gelangen im Takt $T_A$ über die Signaleingänge $E_1$ auf die Multiplizierer MU aller Multiplizierer-Akkumulatoren. Im selben Takt gibt der Adressgenerator AG die Adressen AD ab, so daß die zugehörigen Koeffizienten ebenfalls in diesem Takt aus den Speichern $SP_1$ bis $SP_3$ abgerufen und über die Signaleingänge $E_3$ aller Multiplizierer-Akkumulatoren den Multiplizierern MU zugeleitet werden. Das heißt, auch die Produkte, die von den Ausgängen der Multiplizierer MU dem jeweils zugehörigen Summierer SU zugeleitet werden, sind im Takt des von außen zugeführten Taktes $T_A$ auftretende Datenworte.

Es wird zunächst angenommen, daß die Multiplexer die in der Figur 9 dargestellte Stellung aufweisen. In diesem Fall addiert der jeweilige Summierer SU zu dem vom zugehörigen Multiplizierer MU erhaltenen Produkt seine um eine Taktperiode des von außen zugeführten Taktes $T_A$ ältere Summe. Dies geschieht dadurch, daß in der zugehörigen Verzögerungsschaltung VM die Summe um die Dauer dieser Taktperiode verzögert wird.

Steht jedoch der jeweilige Multiplexer MX in der Stellung 1, so addiert der Summierer SU zu dem vom zugehörigen Multiplizierer MU erhaltenen Produkt die Summe aus dem vorangehenden Multiplizierer-Akkumulator, wobei die Summe ebenfalls in der zugehörigen Verzögerungsschaltung VM um eine Taktperiode verzögert wird. Die Summe gelangt vom Ausgang des Summierers SU im vorangehenden Multiplizer-Akkumulator über dessen Signal-Ausgang $A_M$ auf den Signaleingang $E_2$ und damit in den Multiplexer MX des hier betrachteten Multiplizierer-Akkumulators. Da dem ersten Multiplizierer-Akkumulator $MA_1$ kein weiterer Multiplizierer-Akkumulator vorangeht, liegt an seinem Signaleingang $E_2$ dauernd ein Datenwort mit dem Wert Null an.

An dem Signalausgang $A_M$ des letzten Multiplizierer-Akkumulators $MA_3$ ist über dem Signalausgang A eine in einer Signalsenke SS befindliche Verzögerungsschaltung VSS angeschlossen. Ihrem Taktpulseingang C wird über den Taktausgang TSS der abgeleitete Takt $T_A'$ zugeführt. Auch für diese Verzögerungsschaltung ist die Bezeichnung "Latch" zutreffend. Sie wirkt hier als Übernahmeschaltung. Durch ihre Taktung mit dem abgeleiteten Takt $T_A'$ übernimmt sie aus der an ihrem Eingang anliegenden Folge von Abtastwerten nur diejenigen, die gleichzeitig mit einem Taktimpuls des abgeleiteten Taktes $T_A'$ auftreten. Das heißt, an ihrem nicht dargestellten Ausgang erscheint zur weiteren Verarbeitung in der Signalsenke SS eine Folge von Abtastwerten im Takt des abgeleiteten Taktes $T_A'$, also ein in der Abtastrate vermindertes Signal. Der abgeleitete Takt $T_A'$ wird in der Signalsenke SS nicht nur zur Taktung der Verzögrungsschaltung VSS sondern auch zur Verarbeitung des in der Abtastrate verminderten Signals benötigt.

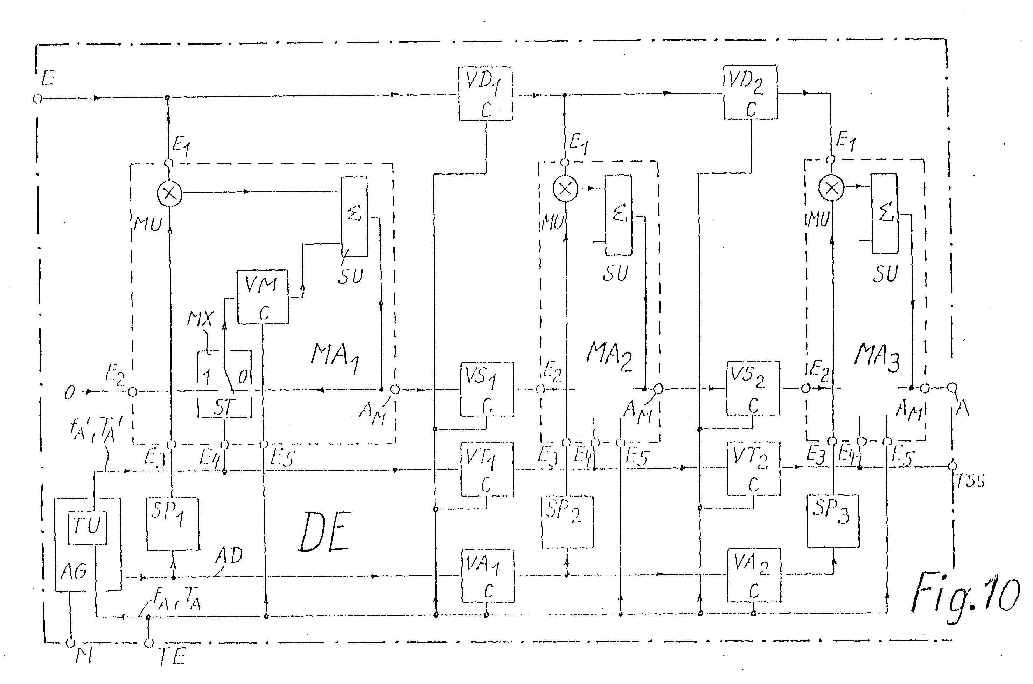

Der in der Figur 8 dargestellte Dezimator hat den Nachteil, daß die den Eingang E speisende Signalquelle mit den vielen Multiplizierern aller Multiplizierer-Akkumulatoren belastet ist. Das erlaubt nur eine geringe Taktfrequenz. Der in der Figur 10 dargestellt Dezimator vermeidet diese Nachteile. Er unterscheidet sich von dem in der Figur 8 dargestellten dadurch, daß zwischen jeder Stufe, die aus einem Multiplizierer-Akkumulator und dem zugehörigen Speicher $SP_1$, $SP_2$ usw. besteht, die Verzögerungsschaltungen $VD_1$, $VS_1$, $VT_1$, $VA_1$ bzw. $VD_2$, $VS_2$, $VT_2$ und $VA_2$ eingefügt sind. Jede Verzögerungsschaltung verzögert das jeweilige Signal um eine Taktperiode des von außen zugeführten Taktes $T_A$. Die Verzögerungsschaltungen können durch D-Flipflops verwirklicht werden, wobei an ihren Taktsignaleingängen der von außen zugeführte Takt $T_A$ anliegt. Bei den Verzögerungsschaltungen $VT_1$ und $VT_2$ genügt jeweils ein Flipflop. Bei den Verzögerungsschaltungen $VD_1$, $VD_2$, $VS_1$, $VS_2$, $VA_1$ und $VA_2$ ist wegen der Paralleldarstellung der jeweiligen Signale mit mehreren Bits die Anzahl der Flipflops gleich der jeweiligen Anzahl von Bits eines Datenwortes.

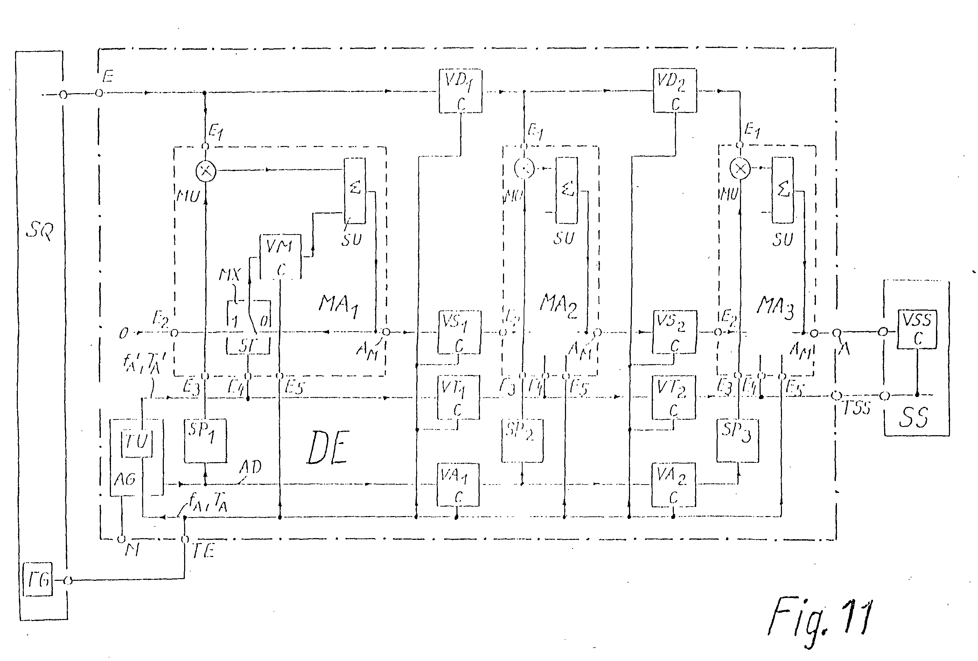

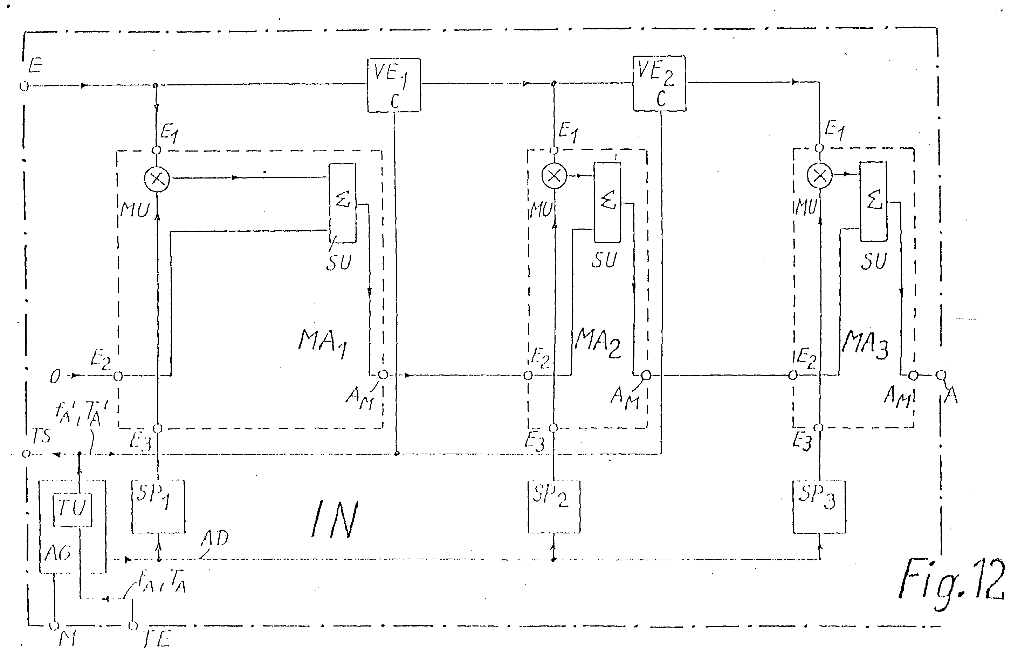

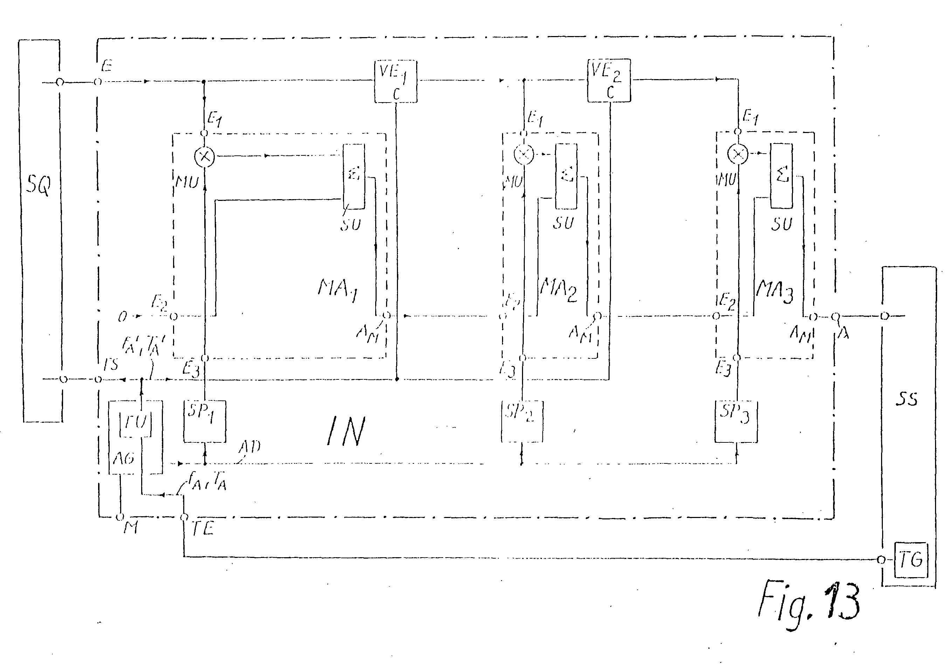

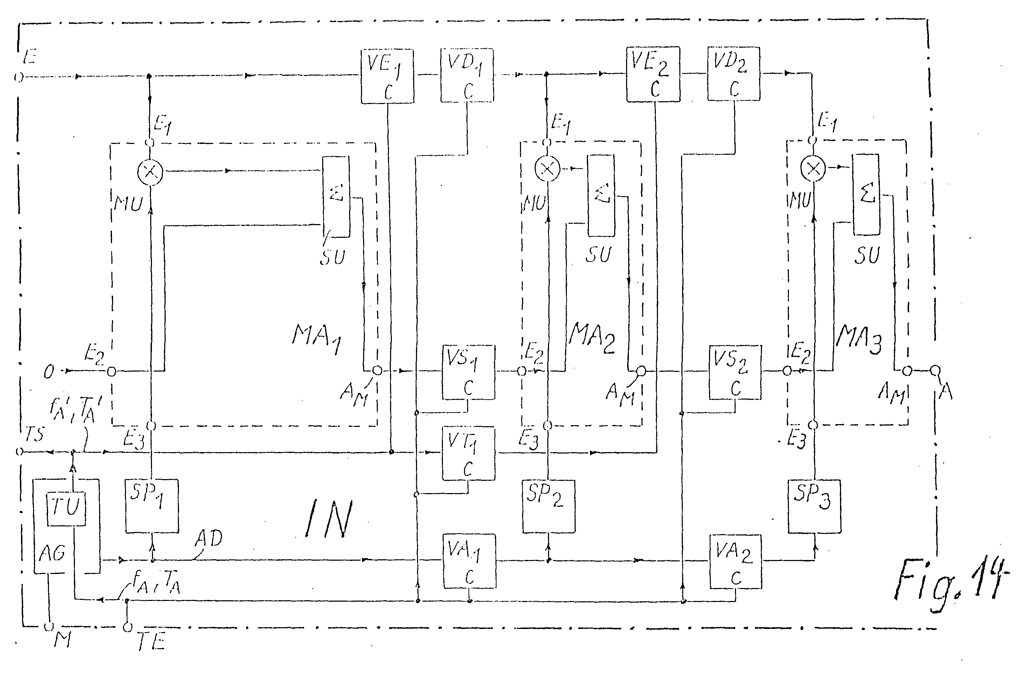

In der Figur 11 ist die Verwendung des in der Figur 10 dargestellten Dezimators gezeichnet. Der Text zur Figur 9 gilt hier sinngemäß.

**Patentansprüche**

1.   Anordnung zur Abtastratendezimierung mittels eines digitalen Filters mit folgenden Merkmalen:

a) Es sind mehrere eingangsseitig simultan oder jeweils über einen Abzweig einer Kette von Verzögerungsschaltungen ($VD_1$, $VD_2$, ...) von den Abtastwerten eines digitalen Eingangssignals(E) in dessen Takt (Eingangstakt) gespeiste Stufen (1, 2, ...) vorgesehen,

b) die Stufen enthalten jeweils einen Multiplizierer (MU), der im Eingangstakt (TA) Produkte jeweils aus einem der genannten Abtastwerte und stufenspezifischen aktuellen Koeffizienten bildet, die jeweils einem stufenspezifischen Speicher (Sp1, Sp2, ...) entnommen sind, wobei die gespeicherten Koeffizienten die Impulsantwort eines Filters beschreiben,

c) in jeder Stufe führt der Ausgang des Multiplizierers (MU) zu einem ersten Eingang eines Summierers (SU), dessen Ausgang den Stufenausgang ($A_M$) bildet und dessen zweitem Eingang eine Verzögerungsschaltung (VM) vorgeschaltet ist, die vom Eingangstakt ($T_A$) getaktet ist, wobei der Summiererausgang der letzten Stufe (3) den Ausgang der Anordnung bildet,

d) es ist ein Ausgangstaktgenerator (Taktumrechner TU) zur Bildung eines dezimierten Ausgangstaktes ($T_A'$) vorgesehen, der mit dem Eingangstakt ($T_A$) nach einem regelmäßigen Rhythmus zeitweise übereinstimmt und der zeitweise Lücken aufweist,

e) die Stufen (1, 2, ...) enthalten jeweils einen Umschalter (MX), und diese Umschalter schalten die Stufen während der Zeiten der Übereinstimmung des Ausgangs- und des Eingangstaktes jeweils über die Verzögerungsschaltung (VM) derart in Serie, daß jeweils ein Summiererausgang mit dem Eingang der Verzögerungsschaltung der nächsten Stufe verbunden ist, wobei der zweite Eingang des Summierers der ersten Stufe (1) kein Signal erhält, während dann, wenn der Ausgangstakt ($T_A'$) Lücken aufweist, die länger sind als eine Periode des Eingangstaktes, in jeder der Stufen der Umschalter (MX) den jeweiligen Summiererausgang mit dem Eingang der jeweiligen Verzögerungsschaltung (VM) verbindet.

2. Anordnung zur Abtastratenerhöhung mittels eines digitalen Filters mit folgenden Merkmalen:

   a) Es sind mehrere eingangsseitig jeweils über einen Abzweig einer Kette von Verzögerungsschaltungen (VE1, VE2, ...) von den Abtastwerten eines digitalen Eingangssignals (E) in dessen Takt (Eingangstakt $T_A'$) gespeiste Stufen (1, 2, ...) vorgesehen,

   b) die Stufen enthalten jeweils einen Multiplizierer (MU), der im Eingangstakt ($T_A'$) Produkte jeweils aus einem der genannten Abtastwerte und stufenspezifischen aktuellen Koeffizienten bildet, die jeweils einem stufenspezifischen Speicher (SP1, SP2, ...) entnommen sind, wobei die gespeicherten Koeffizienten die Impulsantwort eines Filters beschreiben,

   c) in jeder Stufe führt der Ausgang des Multiplizierers (MU) zu einem ersten Eingang eines Summierers (SU), dessen Ausgang den Stufenausgang ($A_M$) bildet,

   d) es ist ein Taktgenerator (TU) zur Bildung eines dezimierten Eingangstaktes ($T_A'$) vorgesehen, der mit dem Ausgangstakt ($T_A$) nach einem regelmäßigen Rhythmus zeitweise übereinstimmt und zeitweise Lücken aufweist und mit dem das digitale Eingangssignal (E) aus einer Signalquelle (SQ) abgerufen wird,

   e) die Stufen (1, 2, ...) liegen derart in Serie, daß jeweils ein Summiererausgang zum zweiten Eingang des Summierers der nächsten Stufe führt, wobei der zweite Eingang des Summierers der ersten Stufe (1) kein Signal erhält und der Summiererausgang der letzten Stufe (3) den Ausgang der Anordnung bildet.

3. Anordnung zur Abtastratendezimierung nach Patentanspruch 1, gekennzeichnet durch folgende Merkmale:

   - es ist ein Adressgenerator (AG) vorgesehen, der aus dem Dezimationsfaktor oder seinem Kehrwert und einem von außen zugeführten Takt ($T_A$) Adressen (AD) sowie einen abgeleiteten Takt ($T_A'$) erzeugt,

   - es sind mehrere hintereinander geschaltete Stufen (1, 2, ...) vorgesehen, die folgendermaßen ausgebildet sind:

   - jede Stufe besteht aus einem Multiplizierer-Akkumulator ($MA_1$, $MA_2$, $MA_3$) und einem Speicher ($SP_1$, $SP_2$, $SP_3$),

   - jeder Multiplizierer-Akkumulator besteht aus einem Multiplizierer (MU), einem Summierer (SU), einer Verzögerungsschaltung (VM) und einem Multiplexer (MX),

   - jeder Multiplizierer-Akkumulator weist einen ersten und zweiten Signaleingang ($E_1$, $E_2$) sowie einen Signal- ausgang ($A_M$) auf,

   - die Verzögerungsschaltung (VM) ist so ausgebildet, daß sie ein an ihrem Eingang anliegenden Signal um eine Taktperiode des abgeleiteten Taktes ($T_A'$) verzögert an ihrem Ausgang abgibt,

   - der erste Signaleingang ($E_1$) ist mit einem ersten Eingang des Multiplizierers (MU) verbunden,

   - der zweite Eingang des Multiplizierers (MU) ist mit dem Ausgang des zugehörigen Speichers ($SP_1$, $SP_2$, bzw. $SP_3$) verbunden,

   - der Ausgang des Multiplizierers (MU) ist mit einem ersten Eingang des Summierers (SU) verbunden,

   - der Ausgang des Summierers (SU) ist mit dem Signalausgang ($A_M$) verbunden,

   - der Multiplexer (MX) ist so ausgebildet und so mit dem zweiten Signaleingang ($E_2$), dem Ausgang des Sum- mierers (SU) und dem Eingang der Verzögerungsschaltung (VM) verbunden, daß während eines Taktimpulses des abgeleiteten Taktes ($T_A'$) der zweite Signaleingang ($E_2$) mit dem Eingang der Verzögerungsschaltung (VM) verbunden ist; zwischen zwei Taktimpulsen des abgeleiteten Taktes ($T_A'$) ist der Ausgang des Summierers (SU) mit dem Eingang der Verzögerungsschaltung (VM) verbunden,

   - der Ausgang der Verzögerungsschaltung (VM) ist mit dem zweiten Eingang des Summierers (SU) verbunden,

- der Signalausgang ($A_M$) eines Multiplizierer-Akkumulators ist mit dem zweiten Signaleingang ($E_2$) des nachfolgenden Multiplizierer-Akkumulators verbunden,

- der Signalausgang des letzten Multiplizierer-Akkumulators ($MA_3$) ist mit einem Signalausgang (A) der Anordnung zur Abtastratenwandlung verbunden,

- der zweite Signaleingang ($E_2$) des ersten Multiplizierer-Akkumulators ($MA_1$) ist so beschaltet, daß an ihm ein Datenwort mit dem Wert Null anliegt,

- in den Speichern ($SP_1$, $SP_2$, $SP_3$) sind Koeffizienten gespeichert, die in der Reihenfolge der Speicher und Adressen die Impulsantwort eines Filters beschreiben,

- die Speicher ($SP_1$, $SP_2$, $SP_3$) sind so ausgebildet, daß nach Anlegen einer Adresse der dieser Adresse zugeordnete Koeffizient an den zweiten Eingang des zugehörigen Multiplizierers (MU) übertragen wird,

- ein Signaleingang (E) für das Eingangssignal der Anordnung zur Abtastratenwandlung ist mit dem jeweils ersten Signaleingang ($E_1$) der Multiplizierer-Akkumulatoren verbunden,

- der Adressgenerator (AG) ist.so ausgebildet, daß ein Taktimpuls des abgeleiteten Taktes ($T_{A'}$) immer gleichzeitig mit einem Taktimpuls des von außen zugeführten Taktes ($T_A$) auftritt und die Taktperiode des abgeleiteten Taktes ($T_{A'}$) gleich einem ganzzahligen Vielfachen der Taktperiode des von außen zugeführten Taktes ($T_A$) ist, wobei Wechsel zwischen zwei benachbarten ganzzahligen, Vielfachen stattfinden, wenn ein nicht ganzzahliger Dezimationsfäktor verwirklicht wird,

- der Adressgenerator (AG) ist so ausgebildet, daß zur Gewinnung der Adressen (AD) fortlaufend zum jeweils aktuellen Kehrwert des Dezimationsfaktors die jeweils um eine Taktperiode des von außen zugeführten Taktes ($T_A$) ältere Summe addiert wird, diese ältere Summe wird als Adresse AD den Speichern ($SP_1$, .... $SP_3$) zugeleitet,

- es ist ein Ausgang (TSS) für den abgeleiteten Takt ($T_{A'}$) vorgesehen.

4. Anordnung zur Abtastratendezimierung nach Anspruch 1 oder zur Abtastratenerhöhung nach Patentanspruch 2, gekennzeichnet durch folgende Merkmale:

- zwischen den Stufen (1, 2....) sind in die Leitungen für das Eingangssignal, für den abgeleiteten Takt ($T_{A'}$) und für die Adressen (AD) sowie in die jeweilige Verbindung zwischen dem Ausgang ($A_M$) eines Multiplizierer-Akkumulators und dem zweiten Signaleingang ($E_2$) des folgenden Multiplizierer-Akkumulators weitere Verzögerungsschaltungen ($VD_1$, $VS_1$, $VT_1$, $VA_1$ bzw. $VD_2$, $VS_2$, $VT_1$, $VA_2$) eingefügt,

- die weiteren Verzögerungsschaltungen ($VD_1$, $VS_1$, $VT_1$, $VA_1$ bzw. $VD_2$, $VS_2$, $VT_2$, $VA_2$) sind so ausgebildet, daß sie das jeweilige Signal um die Taktperiode des von außen zugeführten Taktes ($T_A$) verzögern.

5. Anordnung nach Patentanspruch 1, dadurch gekennzeichnet, daß die Verzögerungsschaltung der ersten Stufe (1) kein Signal erhält und dem Summierausgang der letzten Stufe (3) ein vom Ausgangstakt getaktetes Verzögerungsglied (VSS) als Abschluß nachgeschaltet ist.

6. Anordnung zur Abtastratenerhöhung nach Patentanspruch 2 mit folgenden Merkmalen:

- es ist ein Adressgenerator (AG) vorgesehen, der aus einem Interpolationsfaktor oder seinem Kehrwert und einem von außen zugeführten Takt ($T_A$) Adressen (AD) sowie einen abgeleiteten Takt ($T_{A'}$) erzeugt,

- es sind mehrere hintereinander geschaltete Stufen (1, 2, ...) vorgesehen,

- jede Stufe besteht aus einem Multiplizierer-Akkumulator ($MA_1$, $MA_2$, $MA_3$) und einem Speicher ($SP_1$, $SP_2$, $SP_3$),

- jeder Multiplizierer-Akkumulator ($MA_1$, $MA_2$, $MA_3$) besteht aus einem Multiplizierer (MU) und einem Summierer (SU),

- jeder Multiplizierer-Akkumulator weist einen ersten und zweiten Signaleingang ($E_1$, $E_2$) sowie einen Signalausgang ($A_M$) auf,

- der erste Signaleingang ($E_1$) ist mit einem ersten Eingang des Multiplizierers (MU) verbunden,

- der zweite Eingang des Multiplizierers (MU) ist mit dem Ausgang des zugehörigen Speichers ($SP_1$, $SP_2$ bzw. $SP_3$) verbunden,

- der Ausgang des Multiplizierers (MU) ist mit einem ersten Eingang des Summierers (SU) verbunden,

- der Ausgang des Summierers (SU) ist mit dem Signalausgang ($A_M$) verbunden,

- der zweite Signaleingang($E_2$) ist mit dem zweiten Eingang des Summierers (SU) verbunden,

- der Signalausgang ($A_M$) eines Multiplizierer-Akkumulators ist mit dem zweiten Signaleingang ($E_2$) des nachfolgenden Multiplizierer-Akkumulators verbunden,

- der Signalausgang des letzten Multiplizierer-Akkumulators ($MA_3$) ist mit dem Signalausgang (A) der Anordnung zur Abtastratenwandlung verbunden,

- der zweite Signaleingang ($E_2$) des ersten Multiplizierer-Akkumulators ($MA_1$) ist so beschaltet, daß an ihm ein Datenwort mit dem Wert Null anliegt,

- in den Speichern ($SP_1$, $SP_2$, $SP_3$) sind Koeffizienten gespeichert, die in der Reihenfolge der Speicher und Adressen die Impulsantwort eines Filters beschreiben,

- die Speicher ($SP_1$, $SP_2$, $SP_3$) sind so ausgebildet, daß nach Anlegen einer Adresse der dieser Adresse zugeordnete Koeffizient an den zweiten Eingang des zugehörigen Multiplizierers (MU) übertragen wird,

- ein Signaleingang (E) für das Eingangssignal der Anordnung zur Abtastratenwandlung ist mit dem jeweils ersten Signaleingang ($E_1$) der Multiplizierer-Akkumulatoren verbunden, und zwar mit dem ersten Multiplizierer-Akkumulator ($MA_1$) unmittelbar und mit den weiteren Multiplizierer-Akkumulatoren ($MA_2$, $MA_3$) über Verzögerungsschaltungen ($VE_1$, $VE_2$) für das Eingangssignal,

- die Verzögerungsschaltungen ($VE_1$, $VE_2$) sind so ausgebildet und angeordnet, daß den weiteren Multiplizierer-Akkumulatoren ($MA_2$, $MA_3$) das Eingangssignal jeweils um die Taktperiode des abgeleiteten Taktes ($T_{A'}$) verzögert zugeleitet wird,

- der Adressgenerator (AG) ist so ausgebildet, daß ein Taktimpuls des abgeleiteten Taktes ($T_{A'}$) immer gleichzeitig mit einem Taktimpuls des von außen zugeführten Taktes ($T_A$) auftritt und die Taktperiode des abgeleiteten Taktes ($T_{A'}$) gleich einem ganzzahligen vielfachen der Taktperiode des von außen zugeführten Taktes ($T_A$) ist, wobei Wechsel zwischen zwei benachbarten ganzzahligen Vielfachen stattfinden, wenn ein nicht ganzzahliger Interpolationsfaktor verwirklicht wird,

- der Adressgenerator (AG) ist so ausgebildet, daß zur Gewinnung der Adressen (AD) fortlaufend zum jeweils aktuellen Kehrwert des Interpolationsfaktors die jeweils um eine Taktperiode des von außen zugeführten Taktes ($T_A$) ältere Summe addiert wird; diese ältere Summe wird als Adresse (AD) den Speichern ($SP_1$ ... $SP_3$) zugeleitet,

- es ist ein Ausgang (TS) für den abgeleiteten Takt ($T_{A'}$) vorgesehen.

7. Anordnung nach Anspruch 1 oder 2, gekennzeichnet durch folgende Merkmale:

- es ist ein Adressgenerator (AG) vorgesehen, der aus einem Dezimations- bzw. Interpolationsfaktor oder seinem Kehrwert und einem von außen zugeführten Takt ($T_A$) Adressen (AD) sowie einen abgeleiteten Takt ($T_{A'}$) erzeugt,

- es sind mehrere hintereinander geschaltete Stufen (1, 2,....) vorgesehen,

- jede Stufe besteht aus einem Multiplizierer-Akkumulator ($MA_1$, $MA_2$, $MA_3$) und einem Speicher ($SP_1$, $SP_2$, $SP_3$),

- jeder Multiplizierer-Akkumulator besteht aus einem Multiplizierer (MU), einem Summierer (SU), einer Verzögerungsschaltung (VM), einem Multiplexer (MX) und einem Betriebsartenumschalter (BU),

- jeder Multiplizierer-Akkumulator weist einen ersten und zweiten Signaleingang (E1, $E_2$) sowie einen Signalausgang ($A_M$) auf,

- die Verzögerungsschaltung (VM) ist so ausgebildet, daß sie ein an ihrem Eingang anliegendes Signal um eine Taktperiode des abgeleiteten Taktes ($T_{A'}$) verzögert an ihrem Ausgang abgibt,

- der erste Signaleingang ($E_1$) ist mit einem ersten Eingang des Multiplizierers (MU) verbunden,

- der zweite Eingang des Multiplizierers (MU) ist mit dem Ausgang des zugehörigen Speichers ($SP_1$, $SP_2$ bzw. $SP_3$) verbunden,

- der Ausgang des Multiplizierers (MU) ist mit einem ersten Eingang des Summierers (SU) verbunden,

- der Ausgang des Summierers (SU) ist mit dem Signalausgang ($A_M$) verbunden,

- der Multiplexer (MX) ist so ausgebildet und so mit dem zweiten Signaleingang ($E_2$), dem Ausgang des Summierers (SU) und dem Eingang der Verzögerungsschaltung (VM) verbunden, daß während eines Taktimpulses des abgeleiteten Taktes ($T_{A'}$) der zweite Signaleingang ($E_2$) mit dem Eingang der Verzögerungsschaltung (VM) verbunden ist; zwischen zwei Taktimpulsen des abgeleiteten Taktes ($T_{A'}$) ist der Ausgang des Summierers (SU) mit dem Eingang der Verzögerungsschaltung (VM) verbunden,

- der Betriebsartenumschalter (BU) ist so mit dem zweiten Eingang des Summierers (SU), dem Ausgang der Verzögerungsschaltung (VM) und dem zweiten Signaleingang ($E_2$) verbunden, daß beim Betrieb als Dezimator der Ausgang der Verzögerungsschaltung (VM) mit dem Eingang des Summierers (SU) verbunden ist; beim Betrieb als Interpolator ist der zweite Signaleingang ($E_2$) mit dem Eingang des Summierers (SU) verbunden,

- der Signalausgang ($A_M$) eines Multiplizierer-Akkumulators ist mit dem zweiten Signaleingang ($E_2$)des nachfolgenden Multiplizierer-Akkumulators verbunden,

- der Signalausgang des letzten Multiplizierer-Akkumulators ($MA_3$) ist mit einem Signalausgang (A) der Anordnung zur Abtastratenwandlung verbunden,

- der zweite Signaleingang ($E_2$) des ersten Multiplizierer-Akkumulators ist so beschaltet, daß an ihm ein Datenwort mit dem Wert Null anliegt,

- in den Speichern ($SP_1$, $SP_2$, $SP_3$) sind Koeffizienten gespeichert, die in der Reihenfolge der Speicher und Adressen die Impulsantwort eines Filters beschreiben,

- die Speicher ($SP_1$, $SP_2$, $SP_3$) sind so ausgebildet, daß nach Anlegen einer Adresse der dieser Adresse zugeordnete Koeffizient an den zweiten Eingang des zugehörigen Multiplizierers (MU) übertragen wird,

- ein Signaleingang (E) für das Eingangssignal der Anordnung zur Abtastratenwandlung ist mit dem jeweils ersten Signaleingang ($E_1$) der Multiplizierer-Akkumulatoren verbunden, und zwar mit dem ersten Multiplizierer-Akkumulator ($MA_1$) unmittelbar und mit den weiteren Multiplizierer-Akkumulatoren ($MA_2$, $MA_3$) über weitere Betriebsartenumschalter ($BU_1$, $BU_2$) und Verzögerungsschaltungen ($VE_1$, $VE_2$) für das Eingangssignal,

- die weiteren Betriebsartenumschalter ($BU_1$, $BU_2$) und die Verzögerungsschaltungen ($VE_1$, $VE_2$) sind so ausgebildet und angeordnet, daß beim Betrieb als Dezimator das Eingangssignal auch den weiteren Multiplizierer-Akkumulatoren unmittelbar zugeleitet wird; beim Betrieb als Interpolator wird den weiteren Multiplizierer-Akkumulatoren das Eingangssignal jeweils um die Taktperiode des abgeleiteten Taktes ($T_{A'}$) verzögert zugeleitet,

- der Adressgenerator (AG) ist so ausgebildet, daß ein Taktimpuls des abgeleiteten Taktes ($T_{A'}$) immmer gleichzeitig mit einem Taktimpuls des von außen zugeführten Taktes ($T_A$) auftritt und die Taktperiode des abgeleiteten Taktes ($T_{A'}$) gleich einem ganzzahligen Vielfachen der Taktperiode des von außen zugeführten Taktes ($T_A$) ist, wobei Wechsel zwischen zwei benachbarten ganzzahligen Dezimations- bzw. Interpolationsfaktoren verwirklicht werden.

- der Adressgenerator (AG) ist so ausgebildet, daß zur Gewinnung der Adressen (AD) fortlaufend zum jeweils aktuellen Kehrwert des Dezimations- bzw. Interpolationsfaktors die jeweils um eine Taktperiode des von außen zugeführten Taktes ($T_A$) ältere Summe addiert wird; diese ältere Summe wird als Adresse AD den Speichern (SP1 .... SP$_3$) zugeleitet,

- es ist ein Ausgang (TS) für den abgeleiteten Takt ($T_{A'}$) vorgesehen.

**Claims**

1. Arrangement for sampling rate decimation by means of a digital filter with the following features:

   a) On the input side, a plurality of stages (1, 2, ...) is provided, fed simultaneously or through a branch of a chain of delay circuits ($VD_1$, $VD_2$ ...) with the sampling values of a digital input signal (E) at its clock rate (the input clock signal),
   b) the stages each contain a multiplier (MU), which forms products at the input clock rate ($T_A$) from one of said sampling values and stage-specific current coefficients that are respectively taken from a stage-specific memory store (SP1, SP2, ...), whereby the stored coefficients describe the impulse response of a filter,
   c) in each stage, the output of the multiplier (MU) leads to a first input of an adder (SU), whose output constitutes the stage output ($A_M$) and whose second input is preceded by a delay circuit (VM), which is timed with the input clock signal ($T_A$), whereby the adder output of the last stage (3) constitutes the output of the arrangement,
   d) an output clock generator (clock signal converter TU) is provided for forming a decimated output clock signal ($T_A'$), which sometimes agrees with the input clock signal ($T_A$) according to a regular rhythm and sometimes has gaps,
   e) the stages (1, 2, ...) each contain a changeover switch (MX), and these switches switch the stages during the times of agreement of the output and input clock signals respectively via the delay circuit (VM) in series in such a manner, that an adder output is linked to the input of the delay circuit of the next stage, whereby the second input of the adder of the first stage (1) contains no signal, whereas when the output clock signal ($T_A'$) has gaps that are longer than one period of the input clock signal, in each of the stages the changeover switch (MX) connects the respective adder output to the input of the respective delay circuit (VM).

2. Arrangement for sampling rate elevation by means of a digital filter with the following features:

   a) On the input side, a plurality of stages (1, 2, ...) is provided, fed through a branch of a chain of delay circuits ($VE_1$, $VE_2$, ...) with the sampling values of a digital input signal (E) at its clock rate (the input clock signal, $T_A'$),
   b) the stages each contain a multiplier (MU), which forms products at the input clock rate ($T_A'$) from one of said sampling values and stage-specific current coefficients that are respectively taken from a stage-specific memory store (SP1, SP2, ...), whereby the stored coefficients describe the impulse response of a filter,
   c) in each stage, the output of the multiplier (MU) leads to a first input of an adder (SU), whose output constitutes the stage output ($A_M$),
   d) a clock generator (TU) is provided for forming a decimated input clock signal ($T_A'$), which sometimes agrees with the output clock signal ($T_A$) according to a regular rhythm and sometimes has gaps, and with which the digital input signal (E) is called up from a signal source (SQ),
   e) the stages (1, 2, ...) are arranged in series in such a manner that, in each case, one adder output leads to the second input of the adder of the next stage, whereby the second input of the adder of the first stage (1) receives no signal and the adder output of the last stage (3) constitutes the output of the arrangement.

3. Arrangement for sampling rate decimation according to Claim 1, characterised by the following features:

   - an address generator (AG) is provided, which generates addresses (AD) and a derived clock signal ($T_A'$) from the decimation factor or its reciprocal and an externally supplied clock signal ($T_A$),
   - a plurality of stages (1, 2, ...) connected one after the other is provided, which are constructed as follows:
   - each stage comprises a multiplier-accumulator ($MA_1$, $MA_2$, $MA_3$) and a memory store ($SP_1$, $SP_2$, $SP_3$),

- each multiplier-accumulator comprises a multiplier (MU), an adder (SU), a delay circuit (VM) and a multiplexer (MX),
- each multiplier-accumulator has a first and a second signal input ($E_1$, $E_2$) and a signal output ($A_M$),
- the delay circuit (VM) is so designed that it supplies at its output, delayed by one clock period of the derived clock signal ($T_A'$), a signal applied to its input,
- the first signal input ($E_1$) is connected to a first input of the multiplier (MU),
- the second input of the multiplier (MU) is connected to the output of the associated memory store ($SP_1$, $SP_2$ or $SP_3$),
- the output of the multiplier (MU) is connected to the first input of the adder (SU),
- the output of the adder (SU) is connected to the signal output ($A_M$),
- the multiplexer (MX) is so designed and so connected to the second signal input ($E_2$), the output of the adder (SU) and the input of the delay circuit (VM) that during one clock pulse of the derived clock signal ($T_A'$), the second signal input ($E_2$) is connected to the input of the delay circuit (VM); between two clock pulses of the derived clock signal ($T_A'$), the output of the adder (SU) is connected to the input of the delay circuit (VM),
- the output of the delay circuit (VM) is connected to the second input of the adder (SU),
- the signal output ($A_M$) of a multiplier-accumulator is connected to the second signal input ($E_2$) of the following multiplier-accumulator,
- the signal output of the last multiplier-accumulator ($MA_3$) is connected to a signal output (A) of the arrangement for sampling rate conversion,
- the second signal input ($E_2$) of the first multiplier-accumulator ($MA_1$) is so wired that a data word with the value zero is applied to it,
- in the memory stores ($SP_1$, $SP_2$, $SP_3$), coefficients are stored which describe the impulse response of a filter in the sequence of the memory stores and addresses,
- the memory stores ($SP_1$, $SP_2$, $SP_3$) are so designed that after entry of an address, the coefficient assigned to this address is transferred to the second input of the associated multiplier (MU),
- a signal input (E) for the input signal of the arrangement for sampling rate conversion is linked to the respective first signal input ($E_1$) of the multiplier-accumulators,
- the address generator (AG) is so designed that a clock pulse of the derived clock signal ($T_A'$) always occurs simultaneously with a clock pulse of the externally supplied clock signal ($T_A$) and the clock period of the derived clock signal ($T_A'$) is equal to a whole number multiple of the clock period of the externally supplied clock signal ($T_A$), whereby alternation takes place between two neighbouring whole number multiples if a non-whole number decimation factor is realised,
- the address generator (AG) is so designed that in order to attain the addresses (AD), to the respective current reciprocal value of the decimation factor, is continuously added the respective sum older by one clock period of the externally supplied clock signal ($T_A$), and this older sum is transferred to the memory stores ($SP_1$, ..., $SP_3$) as address (AD),
- an output (TSS) is provided for the derived clock signal ($T_A'$).

4. Arrangement for sampling rate decimation according to Claim 1 or for sampling rate elevation according to Claim 2, characterised by the following features:

- between the stages (1, 2, ...), further delay circuits ($VD_1$, $VS_1$, $VT_1$, $VA_1$ or $VD_2$, $VS_2$, $VT_1$, $VA_2$) are inserted into the lines for the input signal, for the derived clock signal ($T_A'$) and for the addresses (AD) and into the respective connections between the output ($A_M$) of a multiplier-accumulator and the second signal input ($E_2$) of the subsequent multiplier-accumulator,
- the further delay circuits ($VD_1$, $VS_1$, $VT_1$, $VA_1$ or $VD_2$, $VS_2$, $VT_1$, $VA_2$) are so designed that they delay the respective signal by the clock period of the externally supplied clock signal ($T_A$).

5. Arrangement according to Claim 1, characterised in that the delay circuit of the first stage (1) contains no signal and the adder output of the last stage (3) has a delay member (VSS) timed by the output clock signal following it as termination.

6. Arrangement for sampling rate elevation according to Claim 2, with the following features:

- an address generator (AG) is provided, which generates from an interpolation factor or its reciprocal and an externally supplied clock signal ($T_A$) addresses (AD) as well as a derived clock signal ($T_A'$),
- a plurality of stages (1, 2, ...) connected in sequence are provided,
- every stage comprises a multiplier-accumulator ($MA_1$, $MA_2$, $MA_3$) and a memory store ($SP_1$, $SP_2$, $SP_3$),

- every multiplier-accumulator ($MA_1$, $MA_2$, $MA_3$) comprises a multiplier (MU) and an adder (SU),
- every multiplier-accumulator has a first and a second signal input ($E_1$, $E_2$) and a signal output ($A_M$),
- the first signal input ($E_1$) is connected to the first input of the multiplier (MU),
- the second input of the multiplier (MU) is connected to the output of the associated memory store ($SP_1$, $SP_2$ or $SP_3$),
- the output of the multiplier (MU) is connected to a first input of the adder (SU),
- the output of the adder (SU) is connected to the signal output ($A_M$),
- the second signal input ($E_2$) is connected to the second input of the adder (SU),
- the signal output ($A_M$) of a multiplier-accumulator is connected to the second signal input ($E_2$) of the following multiplier-accumulator,
- the signal output of the last multiplier-accumulator ($MA_3$) is connected to the signal output (A) of the arrangement for sampling rate conversion,
- the second signal input ($E_2$) of the first multiplier-accumulator ($MA_1$) is so wired that a data word with the value zero is applied to it,
- in the memory stores ($SP_1$, $SP_2$, $SP_3$), coefficients are stored that describe, in the sequence of the memory stores and addresses, the impulse response of a filter,
- the memory stores ($SP_1$, $SP_2$, $SP_3$) are so designed that following entry of an address, the coefficient allocated to this address is transferred to the second input of the associated multiplier (MU),
- a signal input (E) for the input signal of the arrangement for sampling rate conversion is connected to the respective first signal input ($E_1$) of the multiplier-accumulators, namely to the first multiplier-accumulator ($MA_1$) directly, and to the further multiplier-accumulators ($MA_2$, $MA_3$) via delay circuits ($VE_1$, $VE_2$) for the input signal,
- the delay circuits ($VE_1$, $VE_2$) are so designed and arranged that the input signal is transferred to the further multiplier-accumulators ($MA_2$, $MA_3$) respectively delayed by the clock period of the derived clock signal ($T_A'$),
- the address generator (AG) is so designed that a clock pulse of the derived clock signal ($T_A'$) always occurs simultaneously with a clock pulse of the externally supplied clock signal ($T_A$) and the clock period of the derived clock signal ($T_A'$) is equal to a whole number multiple of the clock period of the externally supplied clock signal ($T_A$), whereby alternation takes place between two neighbouring whole number multiples if a non-whole number interpolation factor is realised,
- the address generator (AG) is so designed that in order to attain the addresses (AD), to the respective current reciprocal value of the interpolation factor, is continuously added the respective sum older by one clock period of the externally supplied clock signal ($T_A$); this older sum is transferred as address (AD) to the memory stores ($SP_1$, ..., $SP_3$),
- an output (TS) for the derived clock signal ($T_A'$) is provided.

7. Arrangement according to Claim 1 or 2, characterised by the following features:

- an address generator (AG) is provided, which generates from a decimation or interpolation factor or its reciprocal value and an externally supplied clock signal ($T_A$) addresses (AD) and a derived clock signal ($T_A'$),
- a plurality of stages (1, 2, ...) connected one behind the other is provided,
- each stage comprises a multiplier-accumulator ($MA_1$, $MA_2$, $MA_3$) and a memory store ($SP_1$, $SP_2$, $SP_3$),
- each multiplier-accumulator comprises a multiplier (MU), an adder (SU), a delay circuit (VM), a multiplexer (MX) and an operating mode changeover switch (BU),
- each multiplier-accumulator has a first and a second signal input ($E_1$, $E_2$) and a signal output ($A_M$),
- the delay circuit (VM) is so designed that it supplies at its output delayed by one clock period of the derived clock signal ($T_A'$) a signal applied to its input,
- the first signal input ($E_1$) is connected to a first input of the multiplier (MU),
- the second input of the multiplier (MU) is connected to the associated memory store ($SP_1$, $SP_2$ or $SP_3$),
- the output of the multiplier (MU) is connected to a first input of the adder (SU),
- the output of the adder (SU) is connected to the signal output ($A_M$),
- the multiplexer (MX) is so designed and so connected to the second signal input ($E_2$), the output of the adder (SU) and the input of the delay circuit (VM), that during a clock pulse of the derived clock signal ($T_A'$), the second signal input ($E_2$) is connected to the input of the delay circuit (VM); between two clock pulses of the derived clock signal ($T_A'$), the output of the adder (SU) is connected to the input of the delay circuit (VM),
- the operating mode changeover switch (BU) is so connected to the second input of the adder (SU), the output of the delay circuit (VM) and the second signal input ($E_2$), that during operation as decimator, the output of the delay circuit (VM) is connected to the input of the adder (SU); on operation as interpolator, the second signal input ($E_2$) is connected to the input of the adder (SU),
- the signal output ($A_M$) of a multiplier-accumulator is connected to the second signal input ($E_2$) of the subsequent

multiplier-accumulator,

- the signal output of the last multiplier-accumulator (MA$_3$) is connected to the signal output (A) of the arrangement for sampling rate conversion,
- the second signal input (E$_2$) of the first multiplier-accumulator is so wired that a data word with the value zero is applied to it,
- coefficients are stored in the memory stores (SP$_1$, SP$_2$, SP$_3$), which describe the impulse response of a filter in the sequence of the memory stores and addresses,
- the memory stores (SP$_1$, SP$_2$, SP$_3$) are so designed that following entry of an address, the coefficient allocated to this address is transferred to the second input of the associated multiplier (MU),
- a signal input (E) for the input signal of the arrangement for sampling rate conversion is connected to the respective first signal input (E$_1$) of the multiplier-accumulators, namely to the first multiplier-accumulator (MA$_1$) directly and to the other multiplier-accumulators (MA$_2$, MA$_3$) via further operating mode changeover switches (BU$_1$, BU$_2$) and delay circuits (VE$_1$, VE$_2$) for the input signal,
- the other operating mode changeover switches (BU$_1$, BU$_2$) and the delay circuits (VE$_1$, VE$_2$) are so designed and arranged that on operation as decimator, the input signal is also transferred directly to the further multiplier-accumulators; on operation as interpolator, the input signal is transferred to the further multiplier-accumulators respectively delayed by one clock period of the derived clock signal (T$_A$'),
- the address generator (AG) is so designed that a clock pulse of the derived clock signal (T$_A$') always occurs simultaneously with a clock pulse of the externally supplied clock signal (T$_A$) and the clock period of the derived clock signal (T$_A$') is equal to a whole number multiple of the clock period of the externally supplied clock signal (T$_A$), whereby alternation between two neighbouring whole number decimation or interpolation factors is realised.
- the address generator (AG) is so designed that in order to attain the addresses (AD), to the respective current reciprocal value of the decimation or interpolation factor, is continuously added the respective sum older by one clock period of the externally supplied clock signal (T$_A$); this older sum is transferred as address (AD) to the memory stores (SP$_1$, ..., SP$_3$),
- an output (TS) for the derived clock signal (T$_A$') is provided.

**Revendications**

1. Dispositif de décimation de fréquence d'échantillonnage au moyen d'un filtre numérique, avec les caractéristiques suivantes :

   a) il est prévu plusieurs étages (1, 2, ...) alimentés du côté d'entrée, simultanément ou chacun par l'intermédiaire d'une dérivation d'une chaîne de montages de temporisation (VD$_1$, VD$_2$, ...), par les valeurs d'échantillonnage d'un signal d'entrée numérique (E), à la cadence de ce signal (cadence d'entrée),
   b) les étages contiennent chacun un multiplicateur (MU), qui forme dans la cadence d'entrée (TA) des produits respectifs d'une des valeurs d'échantillonnage précitées et de coefficients actuels spécifiques de l'étage, qui sont respectivement prélevés d'une mémoire (Sp1, Sp2, ...) spécifique de l'étage, les coefficients mémorisés décrivant la réponse d'impulsion d'un filtre,
   c) dans chaque étage, la sortie du multiplicateur (MU) mène à une première entrée d'un totalisateur (SU), dont la sortie constitue la sortie de l'étage (A$_M$) et dont la deuxième entrée est précédée d'un montage de temporisation (VM) qui est cadencé par la cadence d'entrée (T$_A$), la sortie du totalisateur du dernier étage (3) constituant la sortie du dispositif,
   d) il est prévu un générateur de cadence de sortie (convertisseur de cadence TU) pour former une cadence de sortie décimée (T$_A$'), qui coïncide périodiquement avec la cadence d'entrée (T$_A$) selon un rythme régulier et qui présente périodiquement des lacunes,
   e) les étages (1, 2, ...) contiennent chacun un commutateur (MX), et ces commutateurs commutent respectivement les étages, pendant les temps de coïncidence de la cadence de sortie et de la cadence d'entrée, en série par l'intermédiaire du montage de temporisation (VM) de telle sorte qu'une sortie de totalisateur est chaque fois reliée à l'entrée du montage de temporisation de l'étage suivant, la deuxième entrée du totalisateur du premier étage (1) ne recevant pas de signal, tandis que, lorsque la cadence de sortie (T$_A$') présente des lacunes qui sont plus longues qu'une période de la cadence d'entrée, le commutateur (MX) relie, dans chacun des étages, la sortie de totalisateur respective à l'entrée du montage de temporisation (VM) respectif.

2. Dispositif d'augmentation de fréquence d'échantillonnage au moyen d'un filtre numérique, avec les caractéristiques suivantes :

a) il est prévu plusieurs étages (1, 2, ...) alimentés du côté d'entrée, chacun par l'intermédiaire d'une dérivation d'une chaîne de montages de temporisation (VE1, VE2, ...), par les valeurs d'échantillonnage d'un signal d'entrée numérique (E), à la cadence de ce signal (cadence d'entrée $T_A'$),

b) les étages contiennent chacun un multiplicateur (MU), qui forme dans la cadence d'entrée ($T_A'$) des produits respectifs d'une des valeurs d'échantillonnage précitées et de coefficients actuels spécifiques de l'étage, qui sont respectivement prélevés d'une mémoire (SP1, SP2, ...) spécifique de l'étage, les coefficients mémorisés décrivant la réponse d'impulsion d'un filtre,

c) dans chaque étage, la sortie du multiplicateur (MU) mène à une première entrée d'un totalisateur (SU), dont la sortie constitue la sortie de l'étage ($A_M$),

d) il est prévu un générateur de cadence (TU) pour former une cadence d'entrée décimée ($T_A'$), qui coïncide périodiquement avec la cadence de sortie ($T_A$) selon un rythme régulier et qui présenté périodiquement des lacunes, et avec laquelle le signal d'entrée numérique (E) est appelé à partir d'une source de signal (SQ),

e) les étages (1, 2, ...) se trouvent en série de telle sorte qu'une sortie de totalisateur mène chaque fois à la deuxième entrée du totalisateur de l'étage suivant, la deuxième entrée du totalisateur du premier étage (1) ne recevant pas de signal et la sortie de totalisateur du dernier étage (3) constituant la sortie du dispositif.

3. Dispositif de décimation de fréquence d'échantillonnage selon la revendication 1, caractérisé par les caractéristiques suivantes :

- il est prévu un générateur d'adresses (AG) qui produit, à partir du facteur de décimation ou de sa réciproque et d'une cadence ($T_A$) amenée de l'extérieur, des adresses (AD) ainsi qu'une cadence dérivée ($T_A'$),
- il est prévu plusieurs étages (1, 2, ...) montés en série, qui sont conçus comme suit :
- chaque étage est constitué d'un multiplicateur-accumulateur ($MA_1$, $MA_2$, $MA_3$) et d'une mémoire ($SP_1$, $SP_2$, $SP_3$),
- chaque multiplicateur-accumulateur est constitué d'un multiplicateur (MU), d'un totalisateur (SU), d'un montage de temporisation (VM) et d'un multiplexeur (MX),
- chaque multiplicateur-accumulateur présente une première et une deuxième entrée de signal ($E_1$, $E_2$), ainsi qu'une sortie de signal ($A_M$),
- le montage de temporisation (VM) est conçu de telle sorte qu'un signal appliqué à son entrée est délivré à sa sortie en étant retardé d'une période de la cadence dérivée ($T_A'$),
- la première entrée de signal ($E_1$) est reliée à une première entrée du multiplicateur (MU),
- la deuxième entrée du multiplicateur (MU) est reliée à la sortie de la mémoire associée ($SP_1$, $SP_2$ ou $SP_3$),
- la sortie du multiplicateur (MU) est reliée à une première entrée du totalisateur (SU),
- la sortie du totalisateur (SU) est reliée à la sortie de signal ($A_M$),
- le multiplexeur (MX) est conçu et relié à la deuxième entrée de signal ($E_2$), à la sortie du totalisateur (SU) et à l'entrée du montage de temporisation (VM) de telle sorte que, pendant une impulsion de la cadence dérivée ($T_A'$), la deuxième entrée de signal ($E_2$) est reliée à l'entrée du montage de temporisation (VM), tandis que, entre deux impulsions de la cadence dérivée ($T_A'$), c'est la sortie du totalisateur (SU) qui est reliée à l'entrée du montage de temporisation (VM),
- la sortie du montage de temporisation (VM) est reliée à la deuxième entrée du totalisateur (SU),
- la sortie de signal ($A_M$) d'un multiplicateur-accumulateur est reliée à la deuxième entrée de signal ($E_2$) du multiplicateur-accumulateur consécutif,
- la sortie de signal du dernier multiplicateur-accumulateur ($MA_3$) est reliée à une sortie de signal (A) du dispositif de conversion de fréquence d'échantillonnage,
- la deuxième entrée de signal ($E_2$) du premier multiplicateur-accumulateur ($MA_1$) est branchée de telle sorte qu'un mot de données de valeur zéro lui est appliqué,
- dans les mémoires ($SP_1$, $SP_2$, $SP_3$) sont mémorisés des coefficients qui décrivent, dans l'ordre de succession des mémoires et des adresses, la réponse d'impulsion d'un filtre,
- les mémoires ($SP_1$, $SP_2$, $SP_3$) sont conçues de telle sorte qu'après avoir appliqué une adresse, le coefficient associé à cette adresse est transmis à la deuxième entrée du multiplicateur (MU) correspondant,
- une entrée de signal (E) pour le signal d'entrée du dispositif de conversion de fréquence d'échantillonnage est reliée à la première entrée de signal respective ($E_1$) des multiplicateurs-accumulateurs,
- le générateur d'adresses (AG) est conçu de telle sorte qu'une impulsion de la cadence dérivée ($T_A$) apparaît toujours en même temps qu'une impulsion de la cadence ($T_A$) amenée de l'extérieur et que la période de la cadence dérivée ($T_A'$) est égale à un multiple entier de la période de la cadence ($T_A$) amenée de l'extérieur, des changements entre deux multiples entiers voisins ayant lieu lorsqu'on réalise un facteur de décimation non entier,
- le générateur d'adresses (AG) est conçu de telle sorte que, pour obtenir les adresses (AD), on additionne en continu, à la réciproque actuelle respective du facteur de décimation, la somme respective plus ancienne d'une période de la cadence ($T_A$) amenée de l'extérieur, cette somme plus ancienne étant apportée comme adresse (AD) aux mémoires (SP1, ... , SP3),

- il est prévu une sortie (TSS) pour la cadence dérivée ($T_A'$).

4. Dispositif de décimation de fréquence d'échantillonnage selon la revendication 1 ou d'augmentation de fréquence d'échantillonnage selon la revendication 2, caractérisé par les caractéristiques suivantes :

- des montages de temporisation supplémentaires (respectivement $VD_1$, $VS_1$, $VT_1$, $VA_1$ ou $VD_2$, $VS_2$, $VT_2$, $VA_2$) sont intercalés entre les étages (1, 2, ...), dans les lignes pour le signal d'entrée, pour la cadence dérivée ($T_A'$) et pour les adresses (AD), ainsi que dans la liaison respective entre la sortie ($A_M$) d'un multiplicateur-accumulateur et la deuxième entrée de signal ($E_2$) du multiplicateur-accumulateur suivant,
- les montages de temporisation supplémentaires (respectivement $VD_1$, $VS_1$, $VT_1$, $VA_1$ ou $VD_2$, $VS_2$, $VT_2$, $VA_2$) sont conçus de telle sorte qu'ils retardent le signal respectif de la période de la cadence ($T_A$) amenée de l'extérieur.

5. Dispositif selon la revendication 1, caractérisé en ce que le montage de temporisation du premier étage (1) ne reçoit pas de signal, et un élément de temporisation (VSS) cadencé par la cadence de sortie est monté comme terminaison à la suite de la sortie de totalisateur du dernier étage (3).

6. Dispositif d'augmentation de fréquence d'échantillonnage selon la revendication 2, caractérisé par les caractéristiques suivantes :

- il est prévu un générateur d'adresses (AG) qui produit, à partir d'un facteur d'interpolation ou de sa réciproque et d'une cadence ($T_A$) amenée de l'extérieur, des adresses (AD) ainsi qu'une cadence dérivée ($T_A'$),
- il est prévu plusieurs étages (1, 2, ...) montés en série,
- chaque étage est constitué d'un multiplicateur-accumulateur ($MA_1$, $MA_2$, $MA_3$) et d'une mémoire ($SP_1$, $SP_2$, $SP_3$),
- chaque multiplicateur-accumulateur ($MA_1$, $MA_2$, $MA_3$) est constitué d'un multiplicateur (MU) et d'un totalisateur (SU),
- chaque multiplicateur-accumulateur présente une première et une deuxième entrée de signal ($E_1$, $E_2$), ainsi qu'une sortie de signal ($A_M$),
- la première entrée de signal ($E_1$) est reliée à une première entrée du multiplicateur (MU),
- la deuxième entrée du multiplicateur (MU) est reliée à la sortie de la mémoire associée ($SP_1$, $SP_2$ ou $SP_3$),
- la sortie du multiplicateur (MU) est reliée à une première entrée du totalisateur (SU),
- la sortie du totalisateur (SU) est reliée à la sortie de signal ($A_M$),
- la deuxième entrée de signal ($E_2$) est reliée à la deuxième entrée du totalisateur (SU),
- la sortie de signal ($A_M$) d'un multiplicateur-accumulateur est reliée à la deuxième entrée de signal ($E_2$) du multiplicateur-accumulateur consécutif,
- la sortie de signal du dernier multiplicateur-accumulateur ($MA_3$) est reliée à la sortie de signal (A) du dispositif de conversion de fréquence d'échantillonnage,
- la deuxième entrée de signal ($E_2$) du premier multiplicateur-accumulateur ($MA_1$) est branchée de telle sorte qu'un mot de données de valeur zéro lui est appliqué,
- dans les mémoires ($SP_1$, $SP_2$, $SP_3$) sont mémorisés des coefficients qui décrivent, dans l'ordre de succession des mémoires et des adresses, la réponse d'impulsion d'un filtre,
- les mémoires ($SP_1$, $SP_2$, $SP_3$) sont conçues de telle sorte qu'après avoir appliqué une adresse, le coefficient associé à cette adresse est transmis à la deuxième entrée du multiplicateur (MU) correspondant,
- une entrée de signal (E) pour le signal d'entrée du dispositif de conversion de fréquence d'échantillonnage est reliée à la première entrée de signal respective ($E_1$) des multiplicateurs-accumulateurs, et ce directement pour le premier multiplicateur-accumulateur ($MA_1$) et, pour les autres multiplicateurs-accumulateurs ($MA_2$, $MA_3$), par l'intermédiaire de montages de temporisation ($VE_1$, $VE_2$) pour le signal d'entrée,
- les montages de temporisation ($VE_1$, $VE_2$) sont conçus et disposés de telle sorte que le signal d'entrée est amené aux autres multiplicateurs-accumulateurs ($MA_2$, $MA_3$) en étant respectivement retardé de la période de la cadence dérivée ($T_A'$),
- le générateur d'adresses (AG) est conçu de telle sorte qu'une impulsion de la cadence dérivée ($T_A'$) apparaît toujours en même temps qu'une impulsion de la cadence ($T_A$) amenée de l'extérieur et que la période de la cadence dérivée ($T_A'$) est égale à un multiple entier de la période de la cadence ($T_A$) amenée de l'extérieur, des changements entre deux multiples entiers voisins ayant lieu lorsqu'on réalise un facteur d'interpolation non entier,

- le générateur d'adresses (AG) est conçu de telle sorte que, pour obtenir les adresses (AD), on additionne en continu, à la réciproque actuelle respective du facteur d'interpolation, la somme respective plus ancienne d'une période de la cadence ($T_A$) amenée de l'extérieur, cette somme plus ancienne étant apportée comme adresse (AD) aux mémoires (SP1, ... , SP3),
- il est prévu une sortie (TS) pour la cadence dérivée ($T_A'$).

7. Dispositif selon la revendication 1 ou 2, caractérisé par les caractéristiques suivantes :

- il est prévu un générateur d'adresses (AG) qui produit, à partir d'un facteur respectivement de décimation ou d'interpolation, ou de sa réciproque, et d'une cadence ($T_A$) amenée de l'extérieur, des adresses (AD) ainsi qu'une cadence dérivée ($T_A'$),
- il est prévu plusieurs étages (1, 2, ...) montés en série,
- chaque étage est constitué d'un multiplicateur-accumulateur ($MA_1$, $MA_2$, $MA_3$) et d'une mémoire ($SP_1$, $SP_2$, $SP_3$),
- chaque multiplicateur-accumulateur est constitué d'un multiplicateur (MU), d'un totalisateur (SU), d'un montage de temporisation (VM), d'un multiplexeur (MX) et d'un commutateur de mode de fonctionnement (BU),
- chaque multiplicateur-accumulateur présente une première et une deuxième entrée de signal ($E_1$, $E_2$), ainsi qu'une sortie de signal ($A_M$),
- le montage de temporisation (VM) est conçu de telle sorte qu'un signal appliqué à son entrée est délivré à sa sortie en étant retardé d'une période de la cadence dérivée ($T_A'$),
- la première entrée de signal ($E_1$) est reliée à une première entrée du multiplicateur (MU),
- la deuxième entrée du multiplicateur (MU) est reliée à la sortie de la mémoire associée ($SP_1$, $SP_2$ ou $SP_3$),
- la sortie du multiplicateur (MU) est reliée à une première entrée du totalisateur (SU),
- la sortie du totalisateur (SU) est reliée à la sortie de signal ($A_M$),
- le multiplexeur (MX) est conçu et relié à la deuxième entrée de signal ($E_2$), à la sortie du totalisateur (SU) et à l'entrée du montage de temporisation (VM) de telle sorte que, pendant une impulsion de la cadence dérivée ($T_A'$), la deuxième entrée de signal ($E_2$) est reliée à l'entrée du montage de temporisation (VM), tandis que, entre deux impulsions de la cadence dérivée ($T_A'$), c'est la sortie du totalisateur (SU) qui est reliée à l'entrée du montage de temporisation (VM),
- le commutateur de mode de fonctionnement (BU) est relié à la deuxième entrée du totalisateur (SU), à la sortie du montage de temporisation (VM) et à la deuxième entrée de signal ($E_2$) de telle sorte que, lors du fonctionnement comme décimateur, la sortie du montage de temporisation (VM) est reliée à l'entrée du totalisateur (SU), tandis que, lors du fonctionnement comme interpolateur, c'est la deuxième entrée de signal ($E_2$) qui est reliée à l'entrée du totalisateur (SU),
- la sortie de signal ($A_M$) d'un multiplicateur-accumulateur est reliée à la deuxième entrée de signal ($E_2$) du multiplicateur-accumulateur consécutif,
- la sortie de signal du dernier multiplicateur-accumulateur ($MA_3$) est reliée à une sortie de signal (A) du dispositif de conversion de fréquence d'échantillonnage,
- la deuxième entrée de signal ($E_2$) du premier multiplicateur-accumulateur est branchée de telle sorte qu'un mot de données de valeur zéro lui est appliqué,
- dans les mémoires ($SP_1$, $SP_2$, $SP_3$) sont mémorisés des coefficients qui décrivent, dans l'ordre de succession des mémoires et des adresses, la réponse d'impulsion d'un filtre,
- les mémoires ($SP_1$, $SP_2$, $SP_3$) sont conçues de telle sorte qu'après avoir appliqué une adresse, le coefficient associé à cette adresse est transmis à la deuxième entrée du multiplicateur (MU) correspondant,
- une entrée de signal (E) pour le signal d'entrée du dispositif de conversion de fréquence d'échantillonnage est reliée à la première entrée de signal respective ($E_1$) des multiplicateurs-accumulateurs, et ce directement pour le premier multiplicateur-accumulateur ($MA_1$) et, pour les autres multiplicateurs-accumulateurs ($MA_2$, $MA_3$), par l'intermédiaire de commutateurs supplémentaires de mode de fonctionnement ($BU_1$, $BU_2$) et de montages de temporisation ($VE_1$, $VE_2$) pour le signal d'entrée,
- les commutateurs supplémentaires de mode de fonctionnement ($BU_1$, $BU_2$) et les montages de temporisation ($VE_1$, $VE_2$) sont conçus et disposés de telle sorte que, lors du fonctionnement comme décimateur, le signal d'entrée est également amené directement aux autres multiplicateurs-accumulateurs, tandis que, lors du fonctionnement comme interpolateur, le signal d'entrée est amené aux autres multiplicateurs-accumulateurs en étant respectivement retardé de la période de la cadence dérivée ($T_A'$),
- le générateur d'adresses (AG) est conçu de telle sorte qu'une impulsion de la cadence dérivée ($T_A'$) apparaît toujours en même temps qu'une impulsion de la cadence ($T_A$) amenée de l'extérieur et que la période de la cadence dérivée ($T_A'$) est égale à un multiple entier de la période de la cadence ($T_A$) amenée de l'extérieur, des changements entre deux facteurs de décimation ou respectivement d'interpolation entiers voisins étant réalisés,

- le générateur d'adresses (AG) est conçu de telle sorte que, pour obtenir les adresses (AD), on additionne en continu, à la réciproque actuelle respective du facteur de décimation ou respectivement d'interpolation, la somme respective plus ancienne d'une période de la cadence ($T_A$) amenée de l'extérieur, cette somme plus ancienne étant apportée comme adresse (AD) aux mémoires (SP1, ... , SP3),

- il est prévu une sortie (TS) pour la cadence dérivée ($T_A'$).

Fig.1

EP 0 477 131 B1

EP 0 477 131 B1

Zeile

1 $T_A$ ⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥

2 $T_A'$ ⊥⊥⊥⊥⊥ ⊥⊥⊥⊥⊥ ⊥⊥⊥⊥⊥ ⊥⊥⊥⊥ ⊥⊥⊥⊥ ⊥⊥⊥⊥⊥ ⊥⊥⊥⊥ ⊥⊥⊥⊥ ⊥⊥

**Fig.2a**

Zeile:

1 $T_A$ ⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥⊥

2 $T_A'$ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥ ⊥

**Fig. 2b**

Fig.3

$\frac{1}{m_D}$ bzw. $\frac{1}{m_I}$

EP 0 477 131 B1

Fig. 4

Fig. 5

Interpolator

Fig.6

28

Fig. 7

Fig. 8

Fig.9

Fig.10

Fig. 11

Fig.12

Fig. 13

Fig. 14